# EUROPEAN PATENT SPECIFICATION

(11) **EP 4 562 523 B1**
(45) Date of publication and mention of the grant of the patent: **25.03.2026**
(21) Application number: 23738992.9
(22) Date of filing: 12.06.2023
(51) Int. Cl.: G06F 21/57, G06F 16/951, G06N 20/00

(54) **INCREASING SECURITY OF A COMPUTER PROGRAM USING UNSTRUCTURED TEXT**
ERHÖHUNG DER SICHERHEIT EINES COMPUTERPROGRAMMS MITHILFE UNSTRUKTURIERTER TEXTE
RENFORCEMENT DE LA SÉCURITÉ D'UN PROGRAMME INFORMATIQUE À L'AIDE D'UN TEXTE NON STRUCTURÉ

(30) Priority: 28.07.2022 US 202217876495
(43) Date of publication of application: 04.06.2025
(73) Proprietor: Microsoft Technology Licensing, LLC, Redmond, WA 98052-6399 (US)
(72) Inventor: SHAH, Aditi Kamlesh, Redmond, Washington 98052-6399 (US); BHARGAV-SPANTZEL, Abhilasha, Redmond, Washington 98052-6399 (US)
(74) Representative: CMS Cameron McKenna Nabarro Olswang LLP
(86) International application number: PCT/US2023/025096
(87) International publication number: WO 2024/025669

(56) References cited:
- US-A1- 2022 229 912
- HUANG SHIN-YING ET AL: "Monitoring Social Media for Vulnerability-Threat Prediction and Topic Analysis", 2020 IEEE 19TH INTERNATIONAL CONFERENCE ON TRUST, SECURITY AND PRIVACY IN COMPUTING AND COMMUNICATIONS (TRUSTCOM), IEEE, 29 December 2020 (2020-12-29), pages 1771 - 1776, XP033900724, DOI: 10.1109/TRUSTCOM50675.2020.00243
- DELIU ISUF ET AL: "Collecting Cyber Threat Intelligence from Hacker Forums via a Two-Stage, Hybrid Process using Support Vector Machines and Latent Dirichlet Allocation", 2018 IEEE INTERNATIONAL CONFERENCE ON BIG DATA (BIG DATA), IEEE, 10 December 2018 (2018-12-10), pages 5008 - 5013, XP033508436, DOI: 10.1109/BIGDATA.2018.8622469

## Description

### BACKGROUND

Providers of computer programs often employ human analysts to monitor the dark web and the surface web for discussions regarding security vulnerabilities in their computer programs. The dark web is World Wide Web content that exists on darknets. A darknet is an overlay network within the Internet that is accessible only by using designated software, configurations, and/or authorization. The dark web is not indexed by web search engines. The surface web is World Wide Web content that is indexed by web search engines and is therefore searchable using the web search engines. Accordingly, the surface web is readily available to the general public. Employing the human analysts to monitor the dark web and the surface web is relatively expensive, and the human analysts typically are able to monitor only a limited subset of the various sources in the dark web and the surface web. Accordingly, such conventional web monitoring techniques often are not sufficiently scalable to cover the number of sources of interest.

Moreover, conventional web monitoring techniques often use text classification based on entire sentences to determine whether the sentences relate to a security vulnerability in a computer program. Malicious entities, especially those on the dark web, often use cryptic language to evade detection of their discussions. The conventional web monitoring techniques may not be capable of reliably detecting discussions regarding security vulnerabilities in computer programs that include such cryptic language.

US 2022/0229912 A1 describes various embodiments of a computer-implemented framework for predicting exploitation of software vulnerabilities.

### SUMMARY

The invention is set out in the appended set of claims.

Various approaches are described herein for, among other things, increasing security of a computer program using unstructured text. Unstructured text is text that does not have a pre-defined data model, though it will be recognized that the unstructured text may have an internal structure. For instance, the unstructured text may be natural language text. Examples of unstructured text include but are not limited to a text file, content of a website (e.g., a forum or a blog), and a textual communication between entities. Examples of a textual communication include but are not limited to an instant message (IM), an email, a social media post, and a short message service (SMS) communication. A social media post is a post that is created using a social media computer program. A social media computer program is a computer program that enables creation and sharing of information via (e.g., within) a social network.

Each instance of unstructured data that is generated by a user is referred to as a user-generated post. Accordingly, the user-generated post may be a text file generated by the user, content of a website generated by the user, or a textual communication between the user and another entity. Each user-generated post may include an author of the post, a title of the post, content of the post, a timestamp indicating a time at which the post was created (e.g., posted), a forum from which the post is obtained, a topic of the forum from which the post is obtained, a uniform resource identifier (URI) associated with the post, and so on. Examples of a URI include a uniform resource name (URN) and a uniform resource locator (URL).

Structured text, on the other hand, is text that has a pre-defined data model. Examples of structured text include but are not limited to an algebraic expression, a logical formula, a frame, and a database table.

In an example approach, unstructured text is received from web-based sources. A web-based source is a source that is accessible via the Internet (e.g., rather than being stored or hosted locally on a machine from which a request to access the source is initiated). Examples of a web-based source include but are not limited to a website, a machine that hosts the website, a social media account, an email account, and a store that stores information regarding the social media account and/or the email account. The unstructured text includes user-generated posts. A machine learning model is trained by performing a first operation and a second operation. The first operation includes determining each keyword of a plurality of keywords in the unstructured text that corresponds to a computer program based at least in part on a difference between a frequency with which the respective keyword occurs in a first context in product documentation regarding the computer program and a frequency with which the respective keyword occurs in the first context in a general language corpus satisfying a first criterion (e.g., being greater than or equal to a first threshold). The general language corpus is defined by words that represent (e.g., define) one or more languages. For example, the general language corpus may include all the words of each of the one or more languages. In another example, the general language corpus may include (e.g., may be) the Brown University Standard Corpus of Present-Day American English (a.k.a. the Brown Corpus). The product documentation is associated with a provider of the computer program. The first context is associated with the computer program and/or a dependency of the computer program. The second operation includes determining each keyword of the plurality of keywords in the unstructured text that corresponds to a security vulnerability based at least in part on a difference between a frequency with which the respective keyword occurs in a second context in a vulnerability corpus and a frequency with which the respective keyword occurs in the second context in the general language corpus satisfying a second criterion (e.g., being greater than or equal to a second threshold). The second context is associated with the security vulnerability. The vulnerability corpus is defined by words associated with one or more security vulnerabilities. A word associated with a security vulnerability may indicate a name of the security vulnerability, a name of a file that is associated with the security vulnerability, a type of cybersecurity attack that is capable of being used to exploit the security vulnerability, and so on. The vulnerability corpus may be included in a publicly available database regarding security vulnerabilities, such as the National Vulnerability Database (NVD), or in a private database regarding security vulnerabilities. For instance, such a database may identify known security vulnerabilities and provide information regarding each security vulnerability (e.g., a computer program that has the security vulnerability, malicious entities that have attempted to exploit the security vulnerability, damage that has occurred as a result of a cybersecurity attack that has targeted the security vulnerability, times at which such attacks occurred, and attempts to resolve the security vulnerability). The user-generated posts that are included in the unstructured text are filtered, using the machine learning model, to provide a subset of the user-generated posts such that each user-generated post in the subset includes a keyword that corresponds to the computer program and a keyword that corresponds to the security vulnerability. An action is performed based at least in part on the subset of the user-generated posts.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example unstructured text-based security system in accordance with an embodiment.
FIGS. 2-6 depict flowcharts of example methods for increasing security of a computer program using unstructured text in accordance with embodiments.
FIG. 7 is a block diagram of an example computing system in accordance with an embodiment.
FIG. 8 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

Example embodiments described herein are capable of increasing security of a computer program using unstructured text. Unstructured text is text that does not have a pre-defined data model, though it will be recognized that the unstructured text may have an internal structure. For instance, the unstructured text may be natural language text. Examples of unstructured text include but are not limited to a text file, content of a website (e.g., a forum or a blog), and a textual communication between entities. Examples of a textual communication include but are not limited to an instant message (IM), an email, a social media post, and a short message service (SMS) communication. A social media post is a post that is created using a social media computer program. A social media computer program is a computer program that enables creation and sharing of information via (e.g., within) a social network. Examples of a social media computer program include but are not limited to Discord^{®} developed and distributed by Discord Inc.; Facebook^{®} developed and distributed by Meta Platforms, Inc. (formerly Facebook, Inc.); QQ^{®} (a.k.a. Tencent QQ) developed and distributed by Tencent Holdings Limited; Snapchat^{®} developed and distributed by Snap Inc. (originally Snapchat Inc.); Telegram^{®} developed and distributed by Telegram FZ LLC and Telegram Messenger Inc.; Twitter^{®} developed and distributed by Twitter, Inc.; VK^{™} (a.k.a. Vkontakte) developed and distributed by VK (formerly Mail.ru Group); WeChat^{®} developed and distributed by Tencent Holdings Limited; and WhatsApp^{®} developed and distributed by Meta Platforms, Inc.

Each instance of unstructured data that is generated by a user is referred to as a user-generated post. Accordingly, the user-generated post may be a text file generated by the user, content of a website generated by the user, or a textual communication between the user and another entity. Each user-generated post may include an author of the post, a title of the post, content of the post, a timestamp indicating a time at which the post was created (e.g., posted), a forum from which the post is obtained, a topic of the forum from which the post is obtained, a uniform resource identifier (URI) associated with the post, and so on. Examples of a URI include a uniform resource name (URN) and a uniform resource locator (URL).

Structured text, on the other hand, is text that has a pre-defined data model. Examples of structured text include but are not limited to an algebraic expression, a logical formula, a frame, and a database table.

Example techniques described herein have a variety of benefits as compared to conventional techniques for identifying potential and/or existing cybersecurity threats against a computer program. For instance, the example techniques may provide greater security for the computer program, as compared to the conventional techniques, for example by identifying user-generated posts in unstructured text that relate to a potential or existing cybersecurity threat against the computer program more accurately, more precisely, more efficiently, and/or more reliably than the conventional techniques. For instance, the increased accuracy, precision, efficiency, and/or reliability may result from the identification of each such user-generated post being based on the user-generated post including a keyword that corresponds to the computer program and a keyword that corresponds to a security vulnerability (e.g., rather than an analysis of each sentence as a whole). A software bill of materials (SBOM) may include a list of computer programs, which may be used to filter the results of a vulnerability search for a given set of relevant programs. Confidences that user-generated posts correspond to cybersecurity threats may be relatively high as a result of confidences that keywords therein correspond to the computer program and/or a security vulnerability being relatively high. The example techniques may increase security of authors of the unstructured text by utilizing hashes of identifiers that identify the authors, rather than utilizing the raw identifiers. The hashes of the identifiers enable posts from a particular author to be associated with each other without a need to know personal identifying information about the author, such as the author's identity (e.g., name).

The example techniques may automate identifying unstructured text that relates to a potential or existing attack against a computer program. Accordingly, the amount of time that is consumed to identify the aforementioned unstructured text may be reduced. For example, the example techniques may automatically translate unstructured text written in multiple languages into a single language (e.g., English) by using machine learning. In another example, the example techniques may use machine learning to automatically identify keywords corresponding to the computer program and keywords corresponding to a security vulnerability within the unstructured text in order to identify user-generated posts in the unstructured text that relate to a potential or existing attack against the computer program. A user experience of an information technology (IT) professional who is tasked with maintaining security of the computer program may be increased, for example, by obviating a need for the IT professional to perform operations manually. By eliminating a need for the IT professional to perform operations manually, a cost of maintaining security of the computer program may be reduced. For instance, time spent by an IT professional to perform manual operations has an associated cost. By eliminating the manual operations, the cost of maintaining the security of the computer program can be reduced by the labor cost associated with the IT professional performing the manual operations.

The example techniques may reduce an amount of time and/or resources (e.g., processor cycles, memory, network bandwidth) that is consumed to identify a potential or existing cybersecurity threat against a computer program. For instance, by filtering user-generated posts in unstructured text to identify each of the user-generated posts that includes a keyword corresponding to the computer program and a keyword corresponding to a security vulnerability, the time and/or resources that would have been consumed to identify unstructured text relating to a potential or existing cybersecurity threat against the computer program can be reduced. By reducing the amount of time and/or resources that is consumed by a computing system to identify a potential or existing cybersecurity threat against the computer program, the efficiency of the computing system may be increased.

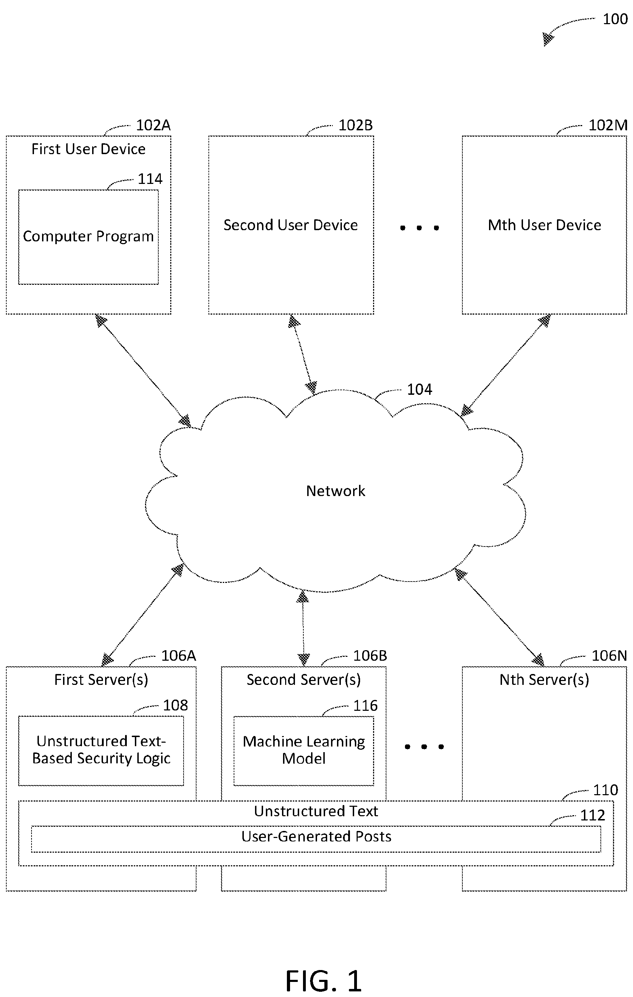

FIG. 1 is a block diagram of an example unstructured text-based security system 100 in accordance with an embodiment. Generally speaking, the unstructured text-based security system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the unstructured text-based security system 100 increases security of a computer program 114 using unstructured text 110. Detail regarding techniques for increasing security of a computer program using unstructured text is provided in the following discussion. As shown in FIG. 1, the unstructured text-based security system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes a processing system comprising at least one processor that is capable of manipulating data in accordance with a set of instructions. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The first user device 102A is shown to host the computer program 114 for non-limiting, illustrative purposes. The computer program 114 may be any suitable type of computer program, including but not limited to a word processing computer program, a spreadsheet computer program, an electronic mail (a.k.a. email) computer program, and a social media computer program. It will be recognized that the computer program 114 (or a portion thereof) may be hosted by any one or more of the servers 106A-106N. The computer program 114 may be configured as a product or a service (e.g., a cloud computing service), though the example embodiments are not limited in this respect.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the unstructured text-based security system 100. The servers 106A-106N are shown to store unstructured text 110 for non-limiting, illustrative purposes. Examples of unstructured text include but are not limited to a text file, content of a website (e.g., content of a web page therein), and a textual message from a user to another user. The unstructured text 110 may be distributed among the servers 106A-106N as shown in FIG. 1, though it will be recognized that the unstructured text 110 may be stored among any one or more servers. Moreover, the unstructured text 110 (or any portion thereof) may be distributed among the user devices 102A-102M or stored by a single user device.

The first server(s) 106A are shown to include unstructured text-based security logic 108 for illustrative purposes. The unstructured text-based security logic 108 is configured to increase security of the computer program 114 using the unstructured text 110. In an example implementation, the unstructured text-based security logic 108 receives the unstructured text 110 from web-based sources. For instance, the web-based sources may include any one or more of the servers 106A-106N, website(s) and/or computer program(s) hosted thereon, and/or account(s) of such website(s) and/or computer program(s). For example, a web-based source may be a social media account, an email account, or a store that stores information about the social media account and/or the email account. The unstructured text includes user-generated posts 112. Each of the user-generated posts 112 is defined by a user-generated instance of unstructured text that is included in the unstructured text 110. For instance, each of the user-generated posts 112 may be a text file generated by a user, content of a website generated by a user, or a textual communication between a user and another user. A first portion of the user-generated posts 112 may be generated by a first user of the first user device 102A; a second portion of the user-generated posts 112, which is different from the first portion of the user-generated posts 112, may be generated by a second user of the second user device 102b, and so on.

The unstructured text-based security logic 108 trains a machine learning model 116 by performing a first operation and a second operation. The first operation includes determining each keyword of a plurality of keywords in the unstructured text 110 that corresponds to the computer program 114 based at least in part on a difference between a frequency with which the respective keyword occurs in a first context in product documentation regarding the computer program 114 and a frequency with which the respective keyword occurs in the first context in a general language corpus satisfying a first criterion (e.g., being greater than or equal to a first threshold). The product documentation is associated with a provider of the computer program 114. For instance, the product documentation may be generated or commissioned by the provider of the computer program 114. In example embodiments, the product documentation describes features, capabilities, and/or benefits of the computer program 114. The general language corpus is defined by words that represent (e.g., define) one or more languages. For instance, the general language corpus may include all the words of each of the one or more languages, though the example embodiments are not limited in this respect. In an example embodiment, the general language corpus includes (e.g., is) the Brown University Standard Corpus of Present-Day American English (a.k.a. the Brown Corpus). The first context is associated with the computer program 114 and/or a dependency of the computer program 114. A dependency of the computer program 114 is code (e.g., a computer program or a script) on which the computer program 114 depends (e.g., to contribute to functionality of the computer program 114). The second operation includes determining each keyword of the plurality of keywords in the unstructured text 110 that corresponds to a security vulnerability based at least in part on a difference between a frequency with which the respective keyword occurs in a second context in a vulnerability corpus and a frequency with which the respective keyword occurs in the second context in the general language corpus satisfying a second criterion (e.g., being greater than or equal to a second threshold). The second context is associated with the security vulnerability.

The vulnerability corpus is defined by words associated with one or more security vulnerabilities. A word associated with a security vulnerability may indicate a name of the security vulnerability, a name of a file that is associated with the security vulnerability, a type of cybersecurity attack that is capable of being used to exploit the security vulnerability, and so on. The vulnerability corpus may be included in a publicly available database regarding security vulnerabilities, such as the National Vulnerability Database (NVD), or in a private database regarding security vulnerabilities. For instance, such a database may identify known security vulnerabilities and provide information regarding each security vulnerability (e.g., a computer program that has the security vulnerability, malicious entities that have attempted to exploit the security vulnerability, damage that has occurred as a result of a cybersecurity attack that has targeted the security vulnerability, times at which such attacks occurred, and attempts to resolve the security vulnerability).

The unstructured text-based security logic 108 filters the user-generated posts 112, which are included in the unstructured text 110, using the machine learning model 116 to provide a subset of the user-generated posts 112 such that each user-generated post in the subset includes a keyword that corresponds to the computer program 114 and a keyword that corresponds to the security vulnerability. The unstructured text-based security logic 108 performs an action based at least in part on the subset of the user-generated posts 112.

The second server(s) 106B are shown to host the machine learning model 116 for illustrative purposes. The unstructured text-based security logic 108 may use the machine learning model 116 to analyze (e.g., develop and/or refine an understanding of) keywords; a first context associated with the computer program 114 and/or one or more dependencies of the computer program 114; a second context associated with one or more security vulnerabilities; relationships between the keywords and the first context; relationships between the keywords and the second context; and confidences in the aforementioned relationships. Accordingly, the machine learning model 116 may learn different ways in which the computer program 114 and security vulnerabilities can be mentioned in sentences. For instance, the machine learning model 116 may find patterns in the unstructured text 110 (e.g., the user-generated posts 112 therein) that indicate the ways that users discuss the computer program 114 and the security vulnerabilities. In an example, the unstructured text-based security logic 108 may use the machine learning to analyze each instance of each keyword and to compare a context of the instance of the respective keyword to the first context and the second context to determine whether the respective keyword corresponds to the computer program 114 and/or a security vulnerability.

In some example embodiments, the unstructured text-based security logic 108 uses a neural network to perform the machine learning to determine (e.g., predict) relationships between instances of the keywords and the aforementioned first context and between instances of the keywords and the aforementioned second context and confidences in the relationships. The unstructured text-based security logic 108 uses those relationships to determine whether each of the keywords corresponds to the computer program 114 and/or a security vulnerability. For instance, the context of each instance of each keyword may be analyzed to determine similarities and differences between the context of the instance of the respective keyword and the first context and between the context of the instance of the respective keyword and the second context, and a determination may be made whether the respective keyword corresponds to the computer program 114 and/or whether the respective keyword corresponds to a security vulnerability based on the similarities and differences between the context(s) of the instance(s) of the respective keyword and the first context and between the context(s) of the instance(s) of the respective keyword and the second context.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the unstructured text-based security logic 108 employs a feed forward neural network to train the machine learning model 116, which is used to determine ML-based confidences. Such ML-based confidences may be used to determine likelihoods that events will occur.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on the context of each portion. For instance, the transformer may be trained to identify the context of each portion using any suitable technique, such as gradient descent.

In an example embodiment, the transformer-based neural network generates a filtering model (e.g., to filter keywords the user-generated posts 112) by utilizing information, such as instances of the keywords, contexts of those instances of the keywords, the first context associated with the computer program 114 and/or one or more dependencies of the computer program 114, the second context associated with each security vulnerability, probabilities that the instances of each keyword occur in the first context, probabilities that the instances of each keyword occur in the second context, probabilities that the keywords correspond to the computer program 114, probabilities that the keywords correspond to a security vulnerability, relationships therebetween, and ML-based confidences that are derived therefrom.

In example embodiments, the unstructured text-based security logic 108 includes training logic and inference logic. The training logic is configured to train a machine learning algorithm that the inference logic uses to determine (e.g., infer) the ML-based confidences. For instance, the training logic may provide sample keywords, sample contexts of the keywords, a sample first context associated with the computer program 114 and/or one or more dependencies of the computer program 114, and a sample second context associated with each security vulnerability as inputs to the algorithm to train the algorithm. The sample data may be labeled. The machine learning algorithm may be configured to derive relationships between the features (e.g., instances of keywords, contexts of those instances of the keywords, the first context associated with the computer program 114 and/or one or more dependencies of the computer program 114, the second context associated with each security vulnerability, probabilities that the instances of each keyword occur in the first context, probabilities that the instances of each keyword occur in the second context, probabilities that the keywords correspond to the computer program 114, probabilities that the keywords correspond to a security vulnerability) and the resulting ML-based confidences. The inference logic is configured to utilize the machine learning algorithm, which is trained by the training logic, to determine the ML-based confidence when the features are provided as inputs to the algorithm.

In example embodiments, the machine learning model 116 is incorporated into the unstructured text-based security logic 108.

The unstructured text-based security logic 108 may be implemented in various ways to increasing security of a computer program using unstructured text, including being implemented in hardware, software, firmware, or any combination thereof. For example, the unstructured text-based security logic 108 may be implemented as computer program code configured to be executed in one or more processors. In another example, at least a portion of the unstructured text-based security logic 108 may be implemented as hardware logic/electrical circuitry. For instance, at least a portion of the unstructured text-based security logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

The unstructured text-based security logic 108 is shown to be incorporated in the first server(s) 106A, and the machine learning model 116 is shown to be incorporated in the second server(s) 106B, for illustrative purposes and are not intended to be limiting. It will be recognized that the unstructured text-based security logic 108 (or any portion(s) thereof) may be incorporated in any one or more of the servers 106A-106N, any one or more of the user devices 102A-102M, or any combination thereof. For example, client-side aspects of the unstructured text-based security logic 108 may be incorporated in one or more of the user devices 102A-102M, and server-side aspects of unstructured text-based security logic 108 may be incorporated in one or more of the servers 106A-106N.

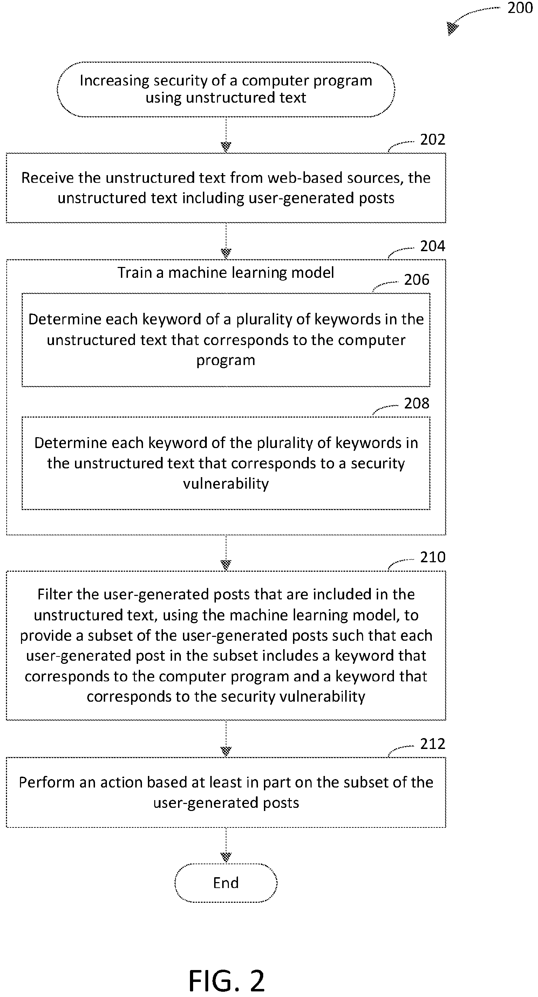

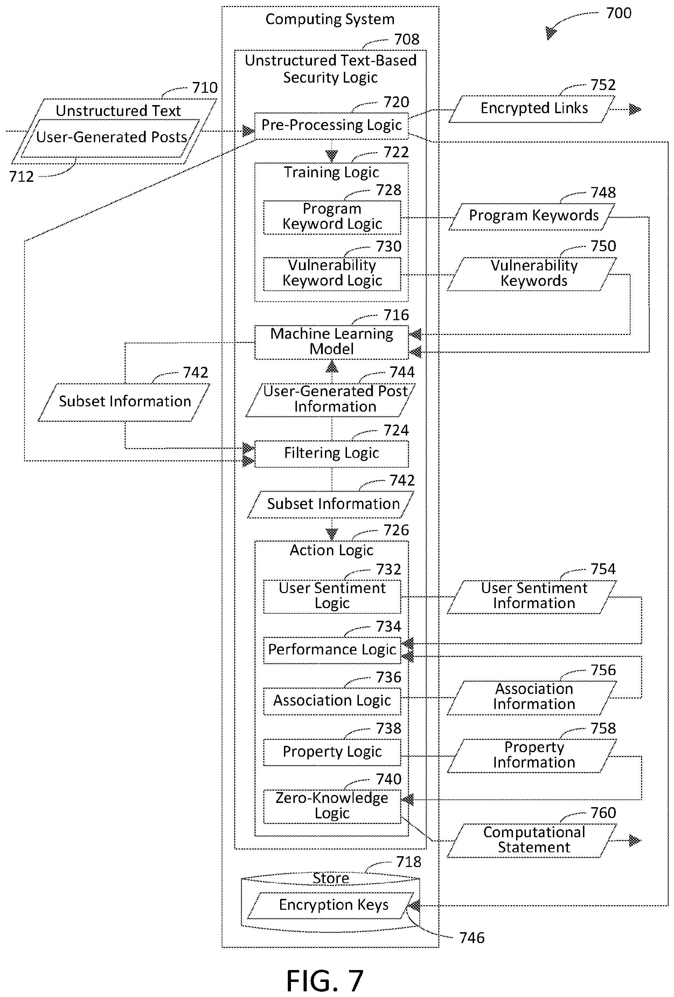

FIGS. 2-6 depict flowcharts 200, 300, 400, 500, and 600 of example methods for increasing security of a computer program using unstructured text in accordance with embodiments. Flowcharts 200, 300, 400, 500, and 600 may be performed by the first server(s) 106A shown in FIG. 1, for example. For illustrative purposes, flowcharts 200, 300, 400, 500, and 600 are described with respect to computing system 700 shown in FIG. 7, which is an example implementation of the first server(s) 106A. As shown in FIG. 7, the computing system 700 includes unstructured text-based security logic 708 and a store 718. The unstructured text-based security logic 708 includes a machine learning model 716, pre-processing logic 720, training logic 722, filtering logic 724, and action logic 726. The training logic 722 includes program keyword logic 728 and vulnerability keyword logic 730. The action logic 726 includes user sentiment logic 732, performance logic 734, association logic 736, property logic 738, and zero-knowledge logic 740. The store 718 may be any suitable type of store. One type of store is a database. For instance, the store 718 may be a relational database, an entity-relationship database, an object database, an object relational database, or an extensible markup language (XML) database. The store 718 is shown to store encryption keys 746 for non-limiting, illustrative purposes. Further structural and operational embodiments will be apparent to persons skilled in the relevant art(s) based on the discussion regarding flowcharts 200, 300, 400, 500, and 600.

As shown in FIG. 2, the method of flowchart 200 begins at step 202. In step 202, the unstructured text is received from web-based sources. The unstructured text includes user-generated posts. A web-based source is a source that is accessible via the Internet (e.g., rather than being stored or hosted locally on a machine from which a request to access the source is initiated). Examples of a web-based source include but are not limited to a website, a machine that hosts the website, a social media account, an email account, and a store that stores information regarding the social media account and/or the email account. The unstructured text may be received from the dark web and/or the surface web. Unstructured text that is received from the dark web is referred to as a dark web corpus. Unstructured text that is received from the surface web is referred to as a surface web corpus. Unstructured text for which a first portion is received from the dark web and a second portion is received from the surface web is referred to as a combined web corpus.

In an example implementation, the pre-processing logic 720 receives unstructured text 710, including user-generated posts 712, from the web-based sources. The pre-processing logic 720 may forward the unstructured text 710 to the training logic 722 and/or the filtering logic 724 for processing. For example, the pre-processing logic 720 may identify information that is included in each of the user-generated posts 712 and forward the information to the training logic 722 and/or the filtering logic 724 for processing. In accordance with this example, the pre-processing logic 720 may identify an author of each post, a title of the post, content of the post, a timestamp indicating a time at which the post was created (e.g., posted), a forum from which the post is obtained, a topic of the forum from which the post is obtained, a uniform resource identifier (URI) associated with the post, and so on. Examples of a URI include a uniform resource name (URN) and a uniform resource locator (URL). The pre-processing logic 720 may provide any of such information as input to the machine learning model (e.g., for purposes of training and/or predicting), as described further below.

The preprocessing logic 720 may process the unstructured text 710 prior to forwarding the unstructured text 710 to the training logic 722 and/or the filtering logic 724. In some example embodiments, the pre-processing logic 720 hashes and/or encrypts at least some of the unstructured text 710 prior to forwarding the unstructured text 710. For example, the pre-processing logic 720 may hash identifiers that identify users (a.k.a. authors) who generate the user-generated posts 712. In another example, the pre-processing logic 720 may encrypt the user-generated posts 712. In yet another example, the pre-processing logic 720 may normalize timestamps in the user-generated posts 712 to a particular time zone or format (e.g., coordinated universal time (UTC)) to account for posts or forums from different time zones.

The pre-processing logic 720 may generate other identifiers, corresponding to the user-generated posts 712, to be provided as additional inputs to the machine learning model 716. For example, the pre-processing logic 720 may generate a thread identifier for each post by combining the name of the forum from which the post is obtained, a topic of the forum, and a title of the post to provide combined information and further by creating a hash of the combined information. In another example, the pre-processing logic 720 may generate a universally unique identifier (UUID) for each post. For instance, the pre-processing logic 720 may randomly generate each UUID.

At step 204, a machine learning model is trained. For instance, the machine learning model may be trained to extract keywords corresponding to the computer program and keywords corresponding to one or more security vulnerabilities from the unstructured text. In an example embodiment, the machine learning model is a named entity recognition (NER) model, which utilizes a NER technique for classification of keywords. For instance, the NER technique may be focused on keywords of interest (i.e., keywords corresponding to the computer program and/or a security vulnerability). In another example embodiment, the machine learning model uses a Bidirectional Encoder Representations from Transformers (BERT) machine learning technique. In accordance with this embodiment, the machine learning model is referred to as a pre-trained BERT model. In an example implementation, the training logic 722 trains the machine learning model 716. For instance, the training logic 722 may provide any of the information included in the unstructured text 710 and any additional information, such as the aforementioned thread identifiers and UUIDs, as inputs to the machine learning model 716 for purposes of training the machine learning model 716.

Step 204 includes step 206 and 208. At step 206, each keyword of a plurality of keywords in the unstructured text that corresponds to the computer program is determined based at least in part on a difference between a frequency with which the respective keyword occurs in a first context in product documentation regarding the computer program and a frequency with which the respective keyword occurs in the first context in a general language corpus satisfying a first criterion (e.g., being greater than or equal to a first threshold). For example, the frequency with which each keyword occurs in the first context in the product documentation may be based on a number (e.g., an average number) of instances of the keyword that occur in the first context in a specified number of keywords (e.g., randomly chosen keywords) of the product documentation. In accordance with this example, the frequency with which each keyword occurs in the first context in the general language corpus may be based on a number (e.g., an average number) of instances of the keyword that occur in the first context in a specified number of keywords (e.g., randomly chosen keywords) of the general language corpus. The product documentation is associated with a provider of the computer program. The first context is associated with the computer program and/or a dependency of the computer program. Examples of a keyword that may correspond to the computer program include but are not limited to "MS Word" and "<program-specific>.dll".

In an example implementation, the program keyword logic 728 determines program keywords 748 among the plurality of keywords in the unstructured text 710. Each of the program keywords 748 corresponds to the computer program. For instance, each program keyword 748 may include a name of the computer program, a name of a dependency of the computer program (e.g., Apache Log4j^{™}, Chromium OS^{™}, or Juniper^{™}), a name of a .dll file or a .exe file associated with the computer program, or a name of a .dll file or a .exe file associated with a dependency of the computer program. The program keyword logic 728 determines each of the program keywords 748 based at least in part on a difference between a frequency with which the respective program keyword occurs in the first context in the product documentation regarding the computer program and a frequency with which the respective program keyword occurs in the first context in the general language corpus satisfying the first criterion (e.g., being greater than or equal to the first threshold). In an aspect of this implementation, the program keyword logic 728 adds the program keywords 748 to the vocabulary of the machine learning model 716 (e.g., the BERT model in some example embodiments).

At step 208, each keyword of the plurality of keywords in the unstructured text that corresponds to a security vulnerability is determined based at least in part on a difference between a frequency with which the respective keyword occurs in a second context in a vulnerability corpus and a frequency with which the respective keyword occurs in the second context in the general language corpus satisfying a second criterion (e.g., being greater than or equal to a second threshold). The first criterion and the second criterion may be same or different. Each of the first threshold and the second threshold may be any suitable number (e.g., 3, 5, 20, or 80). The first threshold and the second threshold may be same or different. In an example, the frequency with which each keyword occurs in the second context in the vulnerability corpus may be based on a number (e.g., an average number) of instances of the keyword that occur in the second context in a specified number of keywords (e.g., randomly chosen keywords) of the vulnerability corpus. In accordance with this example, the frequency with which each keyword occurs in the second context in the general language corpus may be based on a number (e.g., an average number) of instances of the keyword that occur in the second context in a specified number of keywords (e.g., randomly chosen keywords) of the general language corpus. The second context is associated with the security vulnerability. Security vulnerabilities may be identified by reviewing a publicly available database regarding security vulnerabilities, such as the National Vulnerability Database (NVD), or a private database regarding security vulnerabilities. Examples of a keyword that may correspond to the security vulnerability include but are not limited to "buffer overflow" and "XSS".

In an example implementation, the vulnerability keywork logic 730 determines vulnerability keywords 750 among the plurality of keywords in the unstructured text 710. Each of the vulnerability keywords 750 corresponds to a security vulnerability. The vulnerability keyword logic 730 determines each of the vulnerability keywords 750 based at least in part on a difference between a frequency with which the respective vulnerability keyword occurs in the second context in the vulnerability corpus and a frequency with which the respective vulnerability keyword occurs in the second context in the general language corpus satisfying the second criterion (e.g., being greater than or equal to the second threshold). In an aspect of this implementation, the vulnerability keyword logic 728 adds the vulnerability keywords 750 to the vocabulary of the machine learning model 716 (e.g., the BERT model in some example embodiments).

In an example embodiment, step 204 (including steps 206 and 208) is performed iteratively (i.e., for multiple iterations). In each iteration of step 204, the program keyword logic 728 may add the program keywords 748 that are determined for that iteration to the vocabulary of the machine learning model 716, and the vulnerability keyword logic 728 may add the vulnerability keywords 750 determined for that iteration to the vocabulary of the machine learning model 716. Step 204 may be performed for any suitable number of iterations (e.g., 2, 3, 4, or 5). In an example implementation, step 204 is performed for at least two iterations. In another example implementation, step 204 is performed for at least three iterations. The iterations may correspond to respective epochs. Each epoch may be defined by an exposure of the machine learning model 716 to an entirety of the unstructured text 710. Accordingly, the machine learning model 716 may process the entirety of the unstructured text 710 during each epoch.

It will be recognized that the training logic 722 may fine-tune the machine learning model 716 (e.g., after the program keywords 748 and the vulnerability keywords 750 are added to the vocabulary of the machine learning model 716) for purposes of named entity recognition. For instance, the training logic 722 may fine-tune the machine learning model 716 after each iteration of step 204, or the training logic 722 may delay fine-tuning the machine learning model 716 until after a final iteration of step 204.

At step 210, the user-generated posts that are included in the unstructured text are filtered, using the machine learning model, to provide a subset of the user-generated posts such that each user-generated post in the subset includes a keyword that corresponds to the computer program and a keyword that corresponds to the security vulnerability. For instance, the machine learning model may use any of the information included in the unstructured text as inputs to the machine learning model 716 for purposes of filtering the user-generated posts.

In an example implementation, the filtering logic 724 filters the user-generated posts 712 that are included in the unstructured text 710, using the machine learning model 716, to provide a subset of the user-generated posts 712 such that each user-generated post in the subset includes a keyword that corresponds to the computer program and a keyword that corresponds to the security vulnerability. For instance, the filtering logic 724 may provide user-generated post information 744, which indicates (e.g., includes) the user-generated posts 712, as an input to the machine learning model 716 and receive subset information 742 as an output of the machine learning model 716. The subset information 742 indicates (e.g., specifies) which of the user-generated posts 712 are included in the subset. For example, the subset information 742 may identify each of the user-generated posts 712 that is included in the subset and not identify each of the user-generated posts 712 that is not included in the subset. In another example, the subset information 742 may associate each of the user-generated posts 712 that is included in the subset with a first value (e.g., "1") and associate each of the user-generated posts 712 that is not included in the subset with a second value (e.g., "0") that is different from the first value. In an aspect of this implementation, the filtering logic 724 stores each of the user-generated posts 712 that is included in the subset in the store 718. In accordance with this aspect, the filtering logic 724 may not store each of the user-generated posts 712 that is not included in the subset in the store 718. For instance, the filtering logic 724 may discard each of the user-generated posts 712 that is not included in the subset. In further accordance with this aspect, the user-generated posts 712 that are included in the subset may be isolated from the encryption keys 746 in the store 718. For example, the store 718 may include first and second databases. In accordance with this example, the user-generated posts 712 that are included in the subset may be stored in the first database, and the encryption keys 746 may be stored in the second database.

In an example embodiment, the machine learning model is agnostic with regard to the web-based sources from which the unstructured text is received. For example, training the machine learning model at step 204 and filtering the user-generated posts at step 210 may be performed without regard to the web-based sources from which the unstructured text is received. In another example, the machine learning model need not be customized as a result of an additional (e.g., new) web-based source being added to the web-based sources.

In another example embodiment, the machine learning model is agnostic with regard to a language in which each of the user-generated posts is written. For instance, training the machine learning model at step 204 and filtering the user-generated posts at step 210 are performed without regard to the language in which each of the user-generated posts is written. In an aspect of this embodiment, the user-generated posts are converted into a single designated language for processing by the machine learning model. In accordance with this aspect, each of the user-generated posts that is not written in the designated language is translated into the designated language for processing by the machine learning model.

At step 212, an action is performed based at least in part on the subset of the user-generated posts. For instance, performing the action may include generating a report that includes information regarding the subset of the user-generated posts and/or storing the subset of the user-generated posts. In an example implementation, the action logic 726 performs the action based at least in part on the subset of the user-generated posts 712. For instance, the action logic 726 may perform the action based on receipt of the subset information 742 (e.g., based on the subset information 742 indicating which of the user-generated posts 712 are included in the subset).

In an example embodiment, performing the action at step 212 includes identifying a security vulnerability in the computer program based at least in part on the subset of the user-generated posts indicating the security vulnerability. For example, the security vulnerability may pertain to a designated feature of the computer program. In another example, the security vulnerability may be a zero-day. For instance, applicability of the zero-day may be based on a user's software bill of materials (SBOM), which in turn can help in risk assessment. Accordingly, the security vulnerability may be previously unknown to a provider of the computer program. In accordance with this embodiment, performing the action at step 212 further includes resolving (e.g., remediating, fixing, patching, or eliminating) the security vulnerability as a result of identifying the security vulnerability.

In another example embodiment, performing the action at step 212 includes establishing a bounty to be paid for information regarding the security vulnerability. In accordance with this embodiment, the bounty is based at least in part on information that is included in the subset of the user-generated posts. For example, the information may indicate an extent of a negative effect that an attack regarding the security vulnerability is to cause, a number of users that are likely to be negatively affected by the attack, or an amount of time over which the attack is to be performed. In accordance with this example, a relatively higher extent of the negative effect, a relatively higher number of users that are likely to be negatively affected, and/or a relatively higher amount of time over which the attack is to be performed may weigh in favor of a relatively higher bounty; whereas a relatively lower extent of the negative effect, a relatively lower number of users that are likely to be negatively affected, and/or a relatively lower amount of time over which the attack is to be performed may weigh in favor of a relatively lower bounty.

In some example embodiments, one or more steps 202, 204, 206, 208, 210, and/or 212 of flowchart 200 may not be performed. Moreover, steps in addition to or in lieu of steps 202, 204, 206, 208, 210, and/or 212 may be performed. For instance, in an example embodiment, the method of flowchart 200 further includes identifying a user sentiment regarding security of the computer program based at least in part on the subset of the user-generated posts. In an example implementation, the user sentiment logic 732 identifies the user sentiment regarding the security of the computer program. In accordance with this implementation, the user sentiment logic 732 generates user sentiment information 754 to indicate the user sentiment. In accordance with this embodiment, the action is performed at step 212 based at least in part on the user sentiment. For instance, the action may be performed at step 212 based at least in part on the user sentiment being less than or equal to a sentiment threshold. In an example implementation, the performance logic 734 performs the action based at least in part on receipt of the user sentiment information 754 (e.g., based at least in part on the user sentiment indicated by the user sentiment information 754).

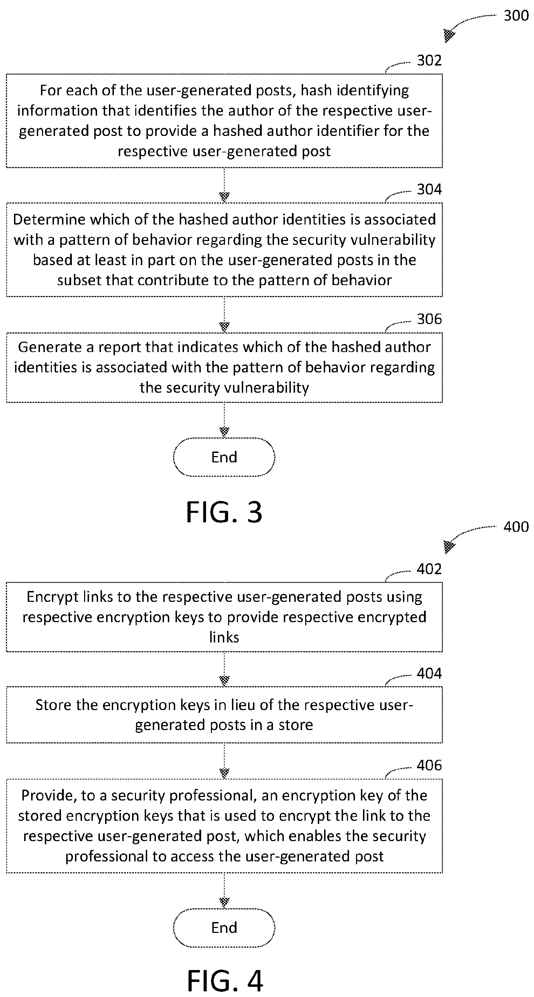

In another example embodiment, each of the user-generated posts has an author. In accordance with this embodiment, the method of flowchart 200 includes one or more of the steps shown in flowchart 300 of FIG. 3. As shown in FIG. 3, the method of flowchart 300 begins at step 302. In step 302, for each of the user-generated posts, hashing identifying information that identifies the author of the respective user-generated post to provide a hashed author identifier for the respective user-generated post. One example of a hash that may be used to hash the identifying information is a SHA512 hash. In an example implementation, the association logic 736 hashes the identifying information for each of the user-generated posts 712.

At step 304, each of the hashed author identities that is associated with a pattern of behavior regarding the security vulnerability is determined based at least in part on the user-generated posts in the subset that contribute to the pattern of behavior. In an example implementation, the association logic 736 determines which of the hashed author identities is associated with the pattern of behavior regarding the security vulnerability based at least in part on the user-generated posts 712 in the subset that contribute to the pattern of behavior. In accordance with this implementation, the association logic 736 generates association information 756 to indicate each of the hashed author identities that is associated with the pattern of behavior.

At step 306, a report that indicates which of the hashed author identities is associated with the pattern of behavior regarding the security vulnerability is generated. For instance, step 306 may be included in step 212 of flowchart 200. In an example implementation, the performance logic 734 generates the report to indicate each hashed author identity that is associated with the pattern of behavior based at least in part on receipt of the association information 756 (e.g., based at least in part on the association information 756 indicating each of the hashed author identities that is associated with the pattern of behavior.

In yet another example embodiment, the method of flowchart 200 includes one or more of the steps shown in flowchart 400 of FIG. 4. As shown in FIG. 4, the method of flowchart 400 begins at step 402. In step 402, links to the respective user-generated posts are encrypted using respective encryption keys to provide respective encrypted links. In an example embodiment, each encryption key is a symmetric encryption key. In accordance with this embodiment, each encryption key may be a universally unique identifier (UUID) that is assigned to the respective post. In another example embodiment, each encryption key is an asymmetric encryption key. In an example implementation, the pre-processing logic 720 encrypts the links to the respective user-generated posts 712 using respective encryption keys 746 to provide respective encrypted links 752. The pre-processing logic 720 may store the user-generated posts 712 in the store 718. It will be recognized that the pre-processing logic 720 may store any suitable information in the store 718, including but not limited to UUIDs associated with the respective user-generated posts 712, thread identifiers associated with the respective user-generated posts 712, and timestamps associated with the respective user-generated posts 712.

At step 404, the encryption keys are stored in lieu of the respective user-generated posts in a store. In an example implementation, the pre-processing logic 720 stores the encryption keys 746, in lieu of the respective user-generated posts 712, in the store 718.

At step 406, an encryption key of the stored encryption keys that is used to encrypt the link to the respective user-generated post is provided to a security professional, which enables the security professional to access the user-generated post. For instance, providing the encryption key to the security professional at step 406 may enable the security professional to decrypt the link and, as a result, access the user-generated post via the link. In an example, step 406 may be included in step 212 of flowchart 200. In an example implementation, the pre-processing logic 720 provides, to the security professional, the encryption key of the stored encryption keys 746 that is used to encrypt the link to the respective user-generated post, which enables the security professional to access the user-generated post.

In still another example embodiment, performing the action at step 212 includes determining a property of the subset of the user-generated posts. For example, the property may be based on a mathematical operand, such as "equal to," "greater than," "less than," or "does contain." In another example, the property may indicate a number of languages associated with the computer program or geo-specific information that indicates a geographic location at which a threat to the computer program originates. In an example implementation, the property logic 738 determines the property of the subset of the user-generated posts 712. The property logic 738 may generate property information 758 to indicate (e.g., specify and/or describe) the property. In accordance with this embodiment, performing the action at step 212 further includes generating a computational statement (a.k.a. commitment) that is configured to prove existence of the property in accordance with a zero-knowledge protocol. A zero-knowledge protocol is a protocol by which a first entity (a.k.a. a prover) provides a computational statement to a second entity (a.k.a. a verifier) to prove to the second entity that the computational statement is true without providing additional information about the property except proof that the property exists. For instance, the computational statement may be encrypted using homomorphic encryption. Accordingly, the second entity may run a query against the computational statement to determine that the property exists. In an example implementation, the zero-knowledge logic 740 generates a computational statement 760 that is configured to prove the existence of the property in accordance with the zero-knowledge protocol. For instance, the zero-knowledge logic 740 may generate the computational statement 760 based on receipt of the property information 758 (e.g., based on the property indicated by the property information 758).

**In** an aspect of this embodiment, determining the property includes determining a user of the computer program that is impacted by the security vulnerability. For instance, the determination may be made by determining that the user has an account associated with the computer program and further by determining that the computer program has the security vulnerability. In accordance with this aspect, generating the computational statement includes configuring the computational statement to prove, in accordance with the zero-knowledge protocol, that the user of the computer program is impacted by the security vulnerability.

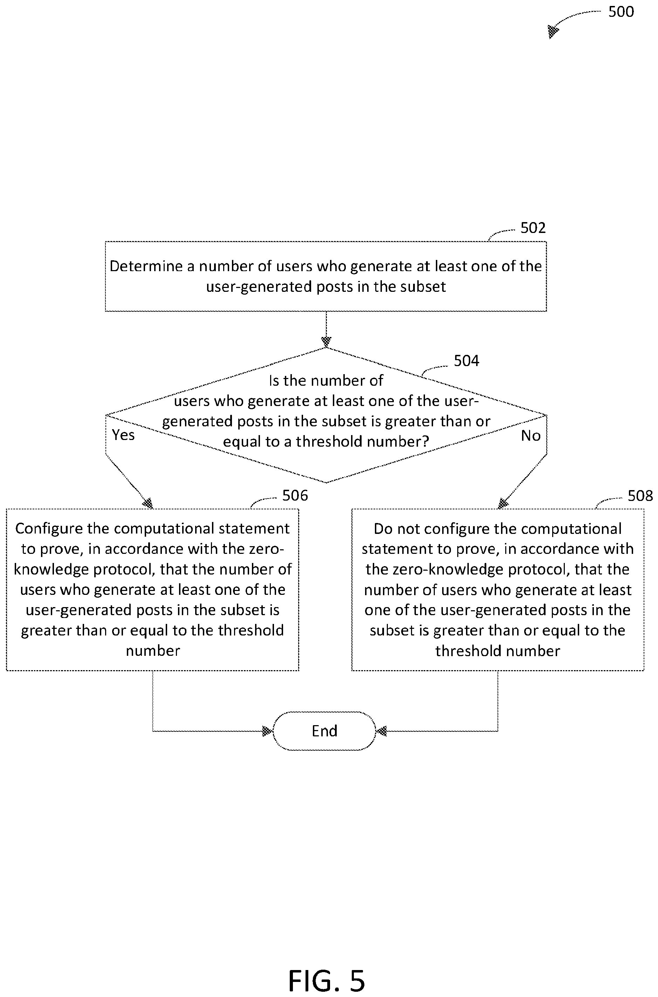

In another aspect of this embodiment, the method of flowchart 200 further includes one or more of the steps shown in flowchart 500 of FIG. 5. As shown in FIG. 5, the method of flowchart 500 begins at step 502. In step 502, a number of users who generate at least one of the user-generated posts in the subset is determined. In an example implementation, the property logic 738 determines the number of users who generate at least one of the user-generated posts 712 in the subset.

At step 504, a determination is made whether the number of users who generate at least one of the user-generated posts in the subset is greater than or equal to a threshold number (e.g., by comparing the number of users who generate at least one of the user-generated posts in the subset to the threshold number). The threshold number may be any suitable number, such as 5, 40, or 800. In an example implementation, the property logic 738 determines whether the number of users who generate at least one of the user-generated posts in the subset is greater than or equal to the threshold number. The property logic 738 may generate property information 758 to indicate whether the number of users who generate at least one of the user-generated posts in the subset is greater than or equal to the threshold number. If the number is greater than or equal to the threshold number, flow continues to step 506. Otherwise, flow continues to step 508.

At step 506, the computational statement is configured to prove, in accordance with the zero-knowledge protocol, that the number of users who generate at least one of the user-generated posts in the subset is greater than or equal to the threshold number. In an example implementation, the zero-knowledge logic 740 configures the computational statement 760 to prove, in accordance with the zero-knowledge protocol, that the number of users who generate at least one of the user-generated posts in the subset is greater than or equal to the threshold number (e.g., by configuring the computational statement 760 to include a first numerical value). For instance, the zero-knowledge logic 740 may configure the computational statement 760 based on receipt of the property information 758 (e.g., based on the property information 758 indicating that the number of users who generate at least one of the user-generated posts in the subset is greater than or equal to the threshold number). Upon completion of step 506, flowchart 500 ends.

At step 508, the computational statement is not configured to prove, in accordance with the zero-knowledge protocol, that the number of users who generate at least one of the user-generated posts in the subset is greater than or equal to the threshold number. In an example implementation, the zero-knowledge logic 740 does not configure the computational statement 760 to prove, in accordance with the zero-knowledge protocol, that the number of users who generate at least one of the user-generated posts in the subset is greater than or equal to the threshold number. For example, the zero-knowledge logic 740 may configure the computational statement 760 to include a second numerical value, which is different from the first numerical value mentioned above with regard to step 506, based on the property information 758 indicating that the number of users who generate at least one of the user-generated posts in the subset is less than the threshold number). Upon completion of step 508, flowchart 500 ends.

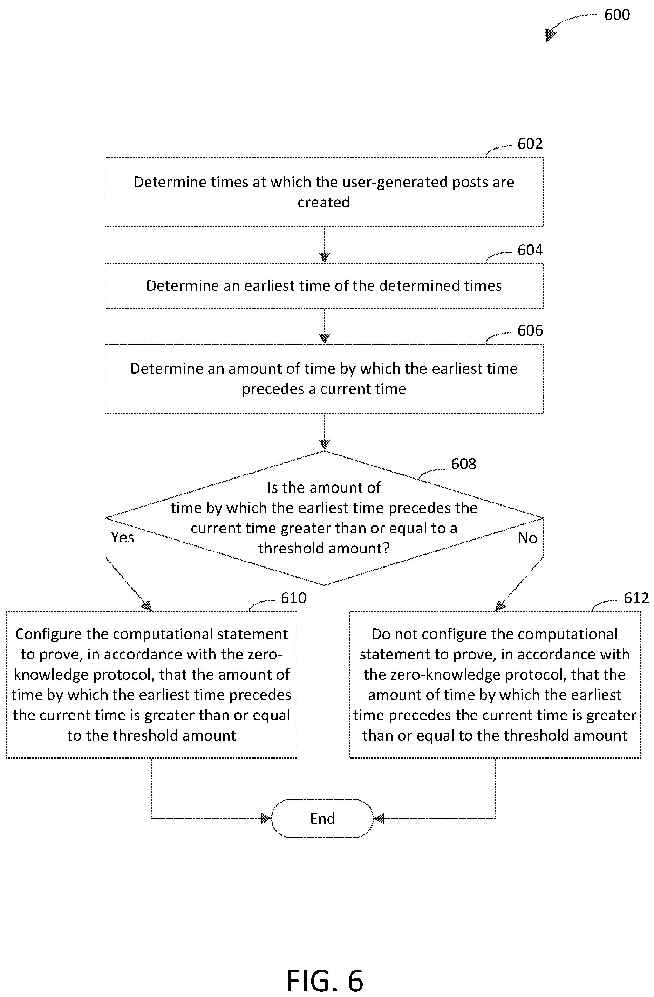

In another aspect of this embodiment, the method of flowchart 200 further includes one or more of the steps shown in flowchart 600 of FIG. 6. As shown in FIG. 6, the method of flowchart 600 begins at step 602. In step 602, times at which the user-generated posts are created are determined. In an example embodiment, the property logic 738 determines times at which the user-generated posts 712 are created. For instance, the property logic 738 may analyze the user-generated posts 712 to identify respective time stamps therein that indicate the times at which the respective user-generated posts 712 are created.

At step 604, an earliest time of the determined times is determined. In an example implementation, the property logic 738 determines the earliest time of the determined times. For instance, the property logic 738 may compare the determined times to identify the earliest time therein.

At step 606, an amount of time by which the earliest time precedes a current time is determined. In an example implementation, the property logic 738 determines the amount of time by which the earliest time precedes the current time. For instance, the property logic 738 may subtract the earliest time from the current time to determine the amount of time by which the earliest time precedes the current time.

At step 608, a determination is made whether the amount of time by which the earliest time precedes the current time is greater than or equal to a threshold amount. The threshold amount may be any suitable amount of time, such as 21 days or 240 hours. In an example implementation, the property logic 738 determines whether the amount of time by which the earliest time precedes the current time is greater than or equal to the threshold amount. The property logic 738 may generate property information 758 to indicate whether the amount of time by which the earliest time precedes the current time is greater than or equal to the threshold amount. If the amount of time by which the earliest time precedes the current time is greater than or equal to the threshold amount, flow continues to step 610. Otherwise, flow continues to step 612.

At step 610, the computational statement is configured to prove, in accordance with the zero-knowledge protocol, that the amount of time by which the earliest time precedes the current time is greater than or equal to the threshold amount. In an example implementation, the zero-knowledge logic 740 configures the computational statement 760 to prove, in accordance with the zero-knowledge protocol, that the amount of time by which the earliest time precedes the current time is greater than or equal to the threshold amount (e.g., by configuring the computational statement 760 to include a first numerical value). For instance, the zero-knowledge logic 740 may configure the computational statement 760 based on receipt of the property information 758 (e.g., based on the property information 758 indicating that the amount of time by which the earliest time precedes the current time is greater than or equal to the threshold amount). Upon completion of step 610, flowchart 600 ends.

At step 612, the computational statement is not configured to prove, in accordance with the zero-knowledge protocol, that the amount of time by which the earliest time precedes the current time is greater than or equal to the threshold amount. In an example implementation, the zero-knowledge logic 740 does not configure the computational statement 760 to prove, in accordance with the zero-knowledge protocol, that the amount of time by which the earliest time precedes the current time is greater than or equal to the threshold amount. For example, the zero-knowledge logic 740 may configure the computational statement 760 to include a second numerical value, which is different from the first numerical value mentioned above with regard to step 610, based on the property information 758 indicating that the amount of time by which the earliest time precedes the current time is less than the threshold amount. In an example embodiment, configuring the computational statement 760 to include the second numerical value reduces (e.g., minimizes) the information disclosed and preserves privacy of data owners. Upon completion of step 612, flowchart 600 ends.

It will be recognized that the computing system 700 may not include one or more of the unstructured text-based security logic 708, the store 718, the machine learning model 716, the pre-processing logic 720, the training logic 722, the filtering logic 724, the action logic 726, the program keyword logic 728, the vulnerability keyword logic 730, the user sentiment logic 732, the performance logic 734, the association logic 736, the property logic 738, and/or the zero-knowledge logic 740. Furthermore, the computing system 700 may include components in addition to or in lieu of the unstructured text-based security logic 708, the store 718, the machine learning model 716, the pre-processing logic 720, the training logic 722, the filtering logic 724, the action logic 726, the program keyword logic 728, the vulnerability keyword logic 730, the user sentiment logic 732, the performance logic 734, the association logic 736, the property logic 738, and/or the zero-knowledge logic 740.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the unstructured text-based security logic 108, the unstructured text-based security logic 708, the machine learning model 716, the pre-processing logic 720, the training logic 722, the filtering logic 724, the action logic 726, the program keyword logic 728, the vulnerability keyword logic 730, the user sentiment logic 732, the performance logic 734, the association logic 736, the property logic 738, the zero-knowledge logic 740, flowchart 200, flowchart 300, flowchart 400, flowchart 500, and/or flowchart 600 may be implemented in hardware, software, firmware, or any combination thereof.

For example, any one or more of the unstructured text-based security logic 108, the unstructured text-based security logic 708, the machine learning model 716, the pre-processing logic 720, the training logic 722, the filtering logic 724, the action logic 726, the program keyword logic 728, the vulnerability keyword logic 730, the user sentiment logic 732, the performance logic 734, the association logic 736, the property logic 738, the zero-knowledge logic 740, flowchart 200, flowchart 300, flowchart 400, flowchart 500, and/or flowchart 600 may be implemented, at least in part, as computer program code configured to be executed in one or more processors.

In another example, any one or more of the unstructured text-based security logic 108, the unstructured text-based security logic 708, the machine learning model 716, the pre-processing logic 720, the training logic 722, the filtering logic 724, the action logic 726, the program keyword logic 728, the vulnerability keyword logic 730, the user sentiment logic 732, the performance logic 734, the association logic 736, the property logic 738, the zero-knowledge logic 740, flowchart 200, flowchart 300, flowchart 400, flowchart 500, and/or flowchart 600 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

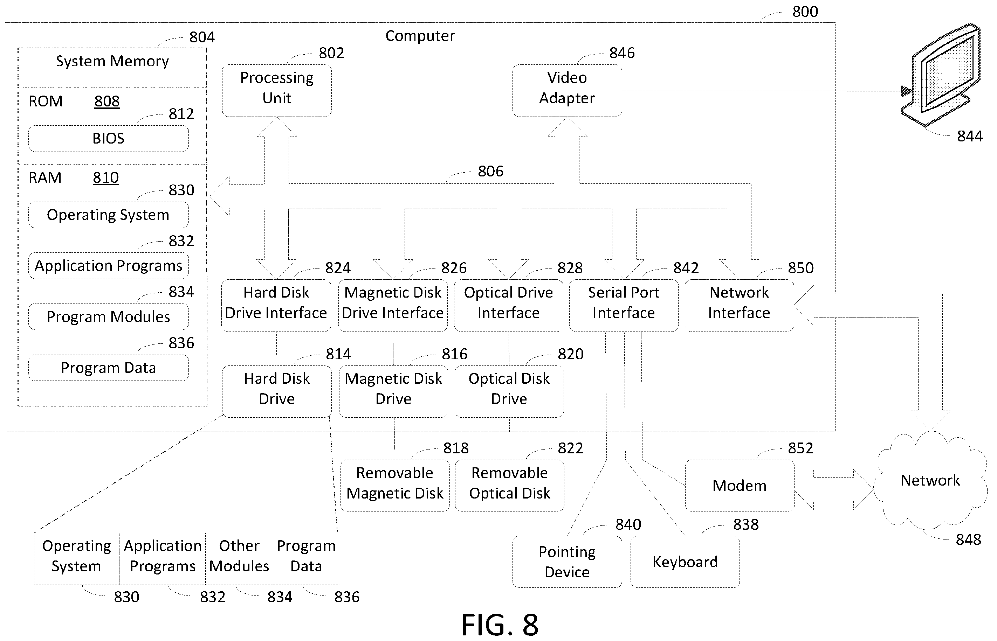

(A1) An example system (Figure 1, 102A-102M, 106A-106N; Figure 7, 700; Figure 8, 800) to increase security of a computer program using unstructured text (Figure 1, 110; Figure 7, 710) comprises a memory (Figure 8, 804, 808, 810) and a processing system (Figure 8, 802) coupled to the memory. The processing system is configured to receive (Figure 2, 202) the unstructured text from web-based sources, the unstructured text including user-generated posts (Figure 1, 112; Figure 7, 712). The processing system is further configured to train (Figure 2, 204) a machine learning model (Figure 1, 116; Figure 7, 716) by performing the following operations: determine (Figure 2, 206) each keyword of a plurality of keywords in the unstructured text that corresponds to the computer program based at least in part on a difference between a frequency with which the respective keyword occurs in a first context in product documentation regarding the computer program and a frequency with which the respective keyword occurs in the first context in a general language corpus satisfying a first criterion, the product documentation is associated with a provider of the computer program, the first context is associated with at least one of the computer program or a dependency of the computer program; and determine (Figure 2, 208) each keyword of the plurality of keywords in the unstructured text that corresponds to a security vulnerability based at least in part on a difference between a frequency with which the respective keyword occurs in a second context in a vulnerability corpus and a frequency with which the respective keyword occurs in the second context in the general language corpus satisfying a second criterion, the second context is associated with the security vulnerability. The processing system is further configured to filter (Figure 2, 210) the user-generated posts that are included in the unstructured text, using the machine learning model, to provide a subset of the user-generated posts such that each user-generated post in the subset includes a keyword that corresponds to the computer program and a keyword that corresponds to the security vulnerability. The processing system is further configured to perform (Figure 2, 212) an action based at least in part on the subset of the user-generated posts.

(A2) In the example system of A1, wherein the machine learning model is agnostic with regard to the web-based sources from which the unstructured text is received.

(A3) In the example system of any of A1-A2, wherein the machine learning model is agnostic with regard to a language in which each of the user-generated posts is written.

(A4) In the example system of any of A1-A3, wherein the processing system is configured to: identify a security vulnerability in the computer program based at least in part on the subset of the user-generated posts indicating the security vulnerability; and resolve the security vulnerability as a result of the security vulnerability being identified.

(A5) In the example system of any of A1-A4, wherein the processing system is configured to: establish a bounty to be paid for information regarding the security vulnerability; and wherein the bounty is based at least in part on information that is included in the subset of the user-generated posts.

(A6) In the example system of any of A1-A5, wherein the processing system is configured to: identify a user sentiment regarding security of the computer program based at least in part on the subset of the user-generated posts; and perform the action based at least in part on the user sentiment.

(A7) In the example system of any of A1-A6, wherein each of the user-generated posts has an author; and wherein the processing system is configured to: for each of the user-generated posts, hash identifying information that identifies the author of the respective user-generated post to provide a hashed author identifier for the respective user-generated post; determine which of the hashed author identities is associated with a pattern of behavior regarding the security vulnerability based at least in part on the user-generated posts in the subset that contribute to the pattern of behavior; and perform the action by generating a report that indicates which of the hashed author identities is associated with the pattern of behavior regarding the security vulnerability.

(A8) In the example system of any of A1-A7, wherein the processing system is further configured to: encrypt links to the respective user-generated posts using respective encryption keys to provide respective encrypted links; and store the encryption keys in lieu of the respective user-generated posts in a store.

(A9) In the example system of any of A1-A8, wherein the processing system is configured to perform the action by performing the following operations: determine a property of the subset of the user-generated posts; and generate a computational statement that is configured to prove existence of the property in accordance with a zero-knowledge protocol.

(A10) In the example system of any of A1-A9, wherein the processing system is configured to: determine a number of users who generate at least one of the user-generated posts in the subset; determine the property by determining that the number of users who generate at least one of the user-generated posts in the subset is greater than or equal to a threshold number; and configure the computational statement to prove, in accordance with the zero-knowledge protocol, that the number of users who generate at least one of the user-generated posts in the subset is greater than or equal to the threshold number.

(A11) In the example system of any of A1-A10, wherein the processing system is configured to: determine times at which the user-generated posts are created; determine an earliest time of the determined times; determine an amount of time by which the earliest time precedes a current time; determine the property by determining that the amount of time by which the earliest time precedes the current time is greater than or equal to a threshold amount; and configure the computational statement to prove, in accordance with the zero-knowledge protocol, that the amount of time by which the earliest time precedes the current time is greater than or equal to the threshold amount.

(A12) In the example system of any of A1-A11, wherein the processing system is configured to: determine the property by determining a user of the computer program that is impacted by the security vulnerability; and configure the computational statement to prove, in accordance with the zero-knowledge protocol, that the user of the computer program is impacted by the security vulnerability.

(A13) In the example system of any of A1-A12, wherein the first context is associated with the computer program.

(B1) An example method of increasing security of a computer program using unstructured text (Figure 1, 110; Figure 7, 710). The method is implemented by a computing system (Figure 1, 102A-102M, 106A-106N; Figure 7, 700; Figure 8, 800). The method comprises receiving (Figure 2, 202) the unstructured text from web-based sources, the unstructured text including user-generated posts (Figure 1, 112; Figure 7, 712). The method further comprises training (Figure 2, 204) a machine learning model (Figure 1, 116; Figure 7, 716) by performing the following operations: determining (Figure 2, 206) each keyword of a plurality of keywords in the unstructured text that corresponds to the computer program based at least in part on a difference between a frequency with which the respective keyword occurs in a first context in product documentation regarding the computer program and a frequency with which the respective keyword occurs in the first context in a general language corpus being greater than or equal to a first threshold, the product documentation is associated with a provider of the computer program, the first context is associated with at least one of the computer program or a dependency of the computer program; and determining (Figure 2, 208) each keyword of the plurality of keywords in the unstructured text that corresponds to a security vulnerability based at least in part on a difference between a frequency with which the respective keyword occurs in a second context in a vulnerability corpus and a frequency with which the respective keyword occurs in the second context in the general language corpus being greater than or equal to a second threshold, the second context is associated with the security vulnerability. The method further comprises filtering (Figure 2, 210) the user-generated posts that are included in the unstructured text, using the machine learning model, to provide a subset of the user-generated posts such that each user-generated post in the subset includes a keyword that corresponds to the computer program and a keyword that corresponds to the security vulnerability. The method further comprises performing (Figure 2, 212) an action based at least in part on the subset of the user-generated posts.

(B2) In the method of B1, wherein the machine learning model is agnostic with regard to the web-based sources from which the unstructured text is received.

(B3) In the method of any of B1-B2, wherein the machine learning model is agnostic with regard to a language in which each of the user-generated posts is written.

(B4) In the method of any of B1-B3, wherein performing the action comprises: identifying a security vulnerability in the computer program based at least in part on the subset of the user-generated posts indicating the security vulnerability; and resolving the security vulnerability as a result of identifying the security vulnerability.

(B5) In the method of any of B1-B4, wherein performing the action comprises: establishing a bounty to be paid for information regarding the security vulnerability; and wherein the bounty is based at least in part on information that is included in the subset of the user-generated posts.

(B6) In the method of any of B1-B5, further comprising: identifying a user sentiment regarding security of the computer program based at least in part on the subset of the user-generated posts; wherein performing the action comprises: performing the action based at least in part on the user sentiment.

(B7) In the method of any of B1-B6, wherein each of the user-generated posts has an author; wherein the method further comprises: for each of the user-generated posts, hashing identifying information that identifies the author of the respective user-generated post to provide a hashed author identifier for the respective user-generated post; and determining which of the hashed author identities is associated with a pattern of behavior regarding the security vulnerability based at least in part on the user-generated posts in the subset that contribute to the pattern of behavior; and wherein performing the action comprises: generating a report that indicates which of the hashed author identities is associated with the pattern of behavior regarding the security vulnerability.

(B8) In the method of any of B1-B7, further comprising: encrypting links to the respective user-generated posts using respective encryption keys to provide respective encrypted links; and storing the encryption keys in lieu of the respective user-generated posts in a store.

(B9) In the method of any of B1-B8, wherein performing the action comprises: determining a property of the subset of the user-generated posts; and generating a computational statement that is configured to prove existence of the property in accordance with a zero-knowledge protocol.

(B10) In the method of any of B1-B9, further comprising: determining a number of users who generate at least one of the user-generated posts in the subset; wherein determining the property comprises: determining that the number of users who generate at least one of the user-generated posts in the subset is greater than or equal to a threshold number; and wherein generating the computational statement comprises: configuring the computational statement to prove, in accordance with the zero-knowledge protocol, that the number of users who generate at least one of the user-generated posts in the subset is greater than or equal to the threshold number.

(B11) In the method of any of B1-B10, further comprising: determining times at which the user-generated posts are created; determining an earliest time of the determined times; and determining an amount of time by which the earliest time precedes a current time; wherein determining the property comprises: determining that the amount of time by which the earliest time precedes the current time is greater than or equal to a threshold amount; and wherein generating the computational statement comprises: configuring the computational statement to prove, in accordance with the zero-knowledge protocol, that the amount of time by which the earliest time precedes the current time is greater than or equal to the threshold amount.

(B12) In the method of any of B1-B11, wherein determining the property comprises: determining a user of the computer program that is impacted by the security vulnerability; and wherein generating the computational statement comprises: configuring the computational statement to prove, in accordance with the zero-knowledge protocol, that the user of the computer program is impacted by the security vulnerability.

(B13) In the method of any of B1-B12, wherein the first context is associated with the computer program.

(C1) An example computer program product (Figure 8, 818, 822) comprising a computer-readable storage medium having instructions recorded thereon for enabling a processor-based system (Figure 1, 102A-102M, 106A-106N; Figure 7, 700; Figure 8, 800) to increase security of a computer program using unstructured text (Figure 1, 110; Figure 7, 710) by performing operations. The operations comprise receiving (Figure 2, 202) the unstructured text from web-based sources, the unstructured text including user-generated posts (Figure 1, 112; Figure 7, 712). The operations further comprise training (Figure 2, 204) a machine learning model (Figure 1, 116; Figure 7, 716) by performing the following operations: determining (Figure 2, 206) each keyword of a plurality of keywords in the unstructured text that corresponds to the computer program based at least in part on a difference between a frequency with which the respective keyword occurs in a first context in product documentation regarding the computer program and a frequency with which the respective keyword occurs in the first context in a general language corpus being greater than or equal to a first threshold, the product documentation is associated with a provider of the computer program, the first context is associated with at least one of the computer program or a dependency of the computer program; and determining (Figure 2, 208) each keyword of the plurality of keywords in the unstructured text that corresponds to a security vulnerability based at least in part on a difference between a frequency with which the respective keyword occurs in a second context in a vulnerability corpus and a frequency with which the respective keyword occurs in the second context in the general language corpus being greater than or equal to a second threshold, the second context is associated with the security vulnerability. The operations further comprise filtering (Figure 2, 210) the user-generated posts that are included in the unstructured text, using the machine learning model, to provide a subset of the user-generated posts such that each user-generated post in the subset includes a keyword that corresponds to the computer program and a keyword that corresponds to the security vulnerability. The operations further comprise generating (Figure 2, 212) a report that includes information regarding the subset of the user-generated posts.

### III. Example Computer System

FIG. 8 depicts an example computer 800 in which embodiments may be implemented. Any one or more of the user devices 102A-102M and/or any one or more of the servers 106A-106N shown in FIG. 1 and/or computing system 700 shown in FIG. 7 may be implemented using computer 800, including one or more features of computer 800 and/or alternative features. Computer 800 may be a general-purpose computing device in the form of a conventional personal computer, a mobile computer, or a workstation, for example, or computer 800 may be a special purpose computing device. The description of computer 800 provided herein is provided for purposes of illustration, and is not intended to be limiting. Embodiments may be implemented in further types of computer systems, as would be known to persons skilled in the relevant art(s).

As shown in FIG. 8, computer 800 includes a processing unit 802, a system memory 804, and a bus 806 that couples various system components including system memory 804 to processing unit 802. Bus 806 represents one or more of any of several types of bus structures, including a memory bus or memory controller, a peripheral bus, an accelerated graphics port, and a processor or local bus using any of a variety of bus architectures. System memory 804 includes read only memory (ROM) 808 and random access memory (RAM) 810. A basic input/output system 812 (BIOS) is stored in ROM 808.

Computer 800 also has one or more of the following drives: a hard disk drive 814 for reading from and writing to a hard disk, a magnetic disk drive 816 for reading from or writing to a removable magnetic disk 818, and an optical disk drive 820 for reading from or writing to a removable optical disk 822 such as a CD ROM, DVD ROM, or other optical media. Hard disk drive 814, magnetic disk drive 816, and optical disk drive 820 are connected to bus 806 by a hard disk drive interface 824, a magnetic disk drive interface 826, and an optical drive interface 828, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 830, one or more application programs 832, other program modules 834, and program data 836. Application programs 832 or program modules 834 may include, for example, computer program logic for implementing any one or more of (e.g., at least a portion of) the unstructured text-based security logic 708, the machine learning model 716, the pre-processing logic 720, the training logic 722, the filtering logic 724, the action logic 726, the program keyword logic 728, the vulnerability keyword logic 730, the user sentiment logic 732, the performance logic 734, the association logic 736, the property logic 738, the zero-knowledge logic 740, flowchart 200 (including any step of flowchart 200), flowchart 300 (including any step of flowchart 300), flowchart 400 (including any step of flowchart 400), flowchart 500 (including any step of flowchart 500), and/or flowchart 600 (including any step of flowchart 600), as described herein.

A user may enter commands and information into the computer 800 through input devices such as keyboard 838 and pointing device 840. Other input devices (not shown) may include a microphone, joystick, game pad, satellite dish, scanner, touch screen, camera, accelerometer, gyroscope, or the like. These and other input devices are often connected to the processing unit 802 through a serial port interface 842 that is coupled to bus 806, but may be connected by other interfaces, such as a parallel port, game port, or a universal serial bus (USB).

A display device 844 (e.g., a monitor) is also connected to bus 806 via an interface, such as a video adapter 846. In addition to display device 844, computer 800 may include other peripheral output devices (not shown) such as speakers and printers.

Computer 800 is connected to a network 848 (e.g., the Internet) through a network interface or adapter 850, a modem 852, or other means for establishing communications over the network. Modem 852, which may be internal or external, is connected to bus 806 via serial port interface 842.

As used herein, the terms "computer program medium" and "computer-readable storage medium" are used to generally refer to media (e.g., non-transitory media) such as the hard disk associated with hard disk drive 814, removable magnetic disk 818, removable optical disk 822, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 832 and other program modules 834) may be stored on the hard disk, magnetic disk, optical disk, ROM, or RAM. Such computer programs may also be received via network interface 850 or serial port interface 842. Such computer programs, when executed or loaded by an application, enable computer 800 to implement features of embodiments discussed herein. Accordingly, such computer programs represent controllers of the computer 800.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described. Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 700, 800) to increase security of a computer program using unstructured text (110; 710), the system (102A-102M, 106A-106N, 700, 800) comprising:
a memory (804, 808, 810); and
a processing system (802) coupled to the memory (804, 808, 810), the processing system (802) configured to:
receive (202) the unstructured text (110, 710) from web-based sources, the unstructured text (110; 710) including user-generated posts (112, 712);
train (204) a machine learning model (116, 716) by performing the following operations:
determine (206) each keyword of a plurality of keywords in the unstructured text (110, 710) that corresponds to the computer program based at least in part on a difference between a frequency with which the respective keyword occurs in a first context in product documentation regarding the computer program and a frequency with which the respective keyword occurs
in the first context in a general language corpus satisfying a first criterion, wherein the
product documentation is associated with a provider of the computer program, and wherein
the first context is associated with at least one of the computer program and a
dependency of the computer program; and
determine (208) each keyword of the plurality of keywords in the unstructured text (110, 710) that corresponds to a security vulnerability based at least in part on a difference between a frequency with which the respective keyword occurs in a second context in the unstructured text and a frequency with which the respective keyword occurs in the second context in the general
language corpus satisfying a second criterion, wherein the second context is associated
with the security vulnerability;
filter (210) the user-generated posts (112, 712) that are included in the unstructured text (110, 710), using the machine learning model (116, 716), to provide a subset of the user-generated posts (112, 712) such that each user-generated post in the subset includes a keyword that corresponds to the computer program and a keyword that corresponds to the security vulnerability; and
perform (212) an action based at least in part on the subset of the user-generated posts (112, 712).

2. The system of claim 1, wherein the machine learning model is agnostic with regard to the web-based sources from which the unstructured text is received.

3. The system of claim 1, wherein the machine learning model is agnostic with regard to a language in which each of the user-generated posts is written.

4. The system of claim 1, wherein the processing system is configured to:
identify a security vulnerability in the computer program based at least in part on the subset of the user-generated posts indicating the security vulnerability; and
resolve the security vulnerability as a result of the security vulnerability being identified.

5. The system of claim 1, wherein the processing system is configured to:
establish a bounty to be paid for information regarding the security vulnerability; and
wherein the bounty is based at least in part on information that is included in the subset of the user-generated posts.

6. The system of claim 1, wherein the processing system is configured to:
identify a user sentiment regarding the computer program based at least in part on the subset of the user-generated posts; and
perform the action based at least in part on the user sentiment.

7. The system of claim 1, wherein each of the user-generated posts has an author; and
wherein the processing system is configured to:
for each of the user-generated posts, hash identifying information that identifies the author of the respective user-generated post to provide a hashed author identifier for the respective user-generated post;
determine which of the hashed author identifiers is associated with a pattern of behavior regarding the security vulnerability based at least in part on the user-generated posts in the subset that contribute to the pattern of behavior; and
perform the action by generating a report that indicates which of the hashed author identifiers is associated with the pattern of behavior regarding the security vulnerability.

8. The system of claim 1, wherein the processing system is further configured to:
encrypt links to the respective user-generated posts using respective encryption keys to provide respective encrypted links; and
store the encryption keys in lieu of the respective user-generated posts in a store.

9. The system of claim 1, wherein the first context is associated with the computer program.

10. A method of increasing security of a computer program using unstructured text (110, 710), the method implemented by a computing system (102A-102M, 106A-106N, 700, 800), the method comprising:
receiving (202) the unstructured text (110, 710) from web-based sources, the unstructured text including user-generated posts (112, 712);
training (204) a machine learning model (116, 716) by performing the following operations:
determining (206) each keyword of a plurality of keywords in the unstructured text (110, 710) that corresponds to the computer program based at least in part on a difference between a frequency with which the respective keyword occurs in a first context in product documentation regarding the computer program and a frequency with which the respective keyword occurs in the first context in a general language
corpus being greater than or equal to a first threshold, wherein the product documentation is
associated with a provider of the computer program, and wherein the first context is associated with
at least one of the computer program and a dependency of the computer program; and
determining (208) each keyword of the plurality of keywords in the unstructured text (110, 710) that corresponds to a security vulnerability based at least in part on a difference between a frequency with which the respective keyword occurs in a second context in the unstructured text and a frequency with which the respective keyword occurs in the second context in the general language corpus being greater than or equal
to a second threshold, wherein the second context is associated with the security vulnerability;
filtering (210) the user-generated posts (112, 712) that are included in the unstructured text (110, 710), using the machine learning model (116, 716), to provide a subset of the user-generated posts (112, 712) such that each user-generated post in the subset includes a keyword that corresponds to the computer program and a keyword that corresponds to the security vulnerability; and
performing (212) an action based at least in part on the subset of the user-generated posts (112, 712).

11. The method of claim 10, wherein performing the action comprises:
determining a property of the subset of the user-generated posts; and
generating a computational statement that is configured to prove existence of the property in accordance with a zero-knowledge protocol.

12. The method of claim 11, further comprising:
determining a number of users who generate at least one of the user-generated posts in the subset;
wherein determining the property comprises:
determining that the number of users who generate at least one of the user-generated posts in the subset is greater than or equal to a threshold number; and
wherein generating the computational statement comprises:
configuring the computational statement to prove, in accordance with the zero-knowledge protocol, that the number of users who generate at least one of the user-generated posts in the subset is greater than or equal to the threshold number.

13. The method of claim 11, further comprising:
determining times at which the user-generated posts are created;
determining an earliest time of the determined times; and
determining an amount of time by which the earliest time precedes a current time;
wherein determining the property comprises:
determining that the amount of time by which the earliest time precedes the current time is greater than or equal to a threshold amount; and wherein generating the computational statement comprises:
configuring the computational statement to prove, in accordance with the zero-knowledge protocol, that the amount of time by which the earliest time precedes the current time is greater than or equal to the threshold amount.

14. The method of claim 11, wherein determining the property comprises:
determining a user of the computer program that is impacted by the security vulnerability; and
wherein generating the computational statement comprises:
configuring the computational statement to prove, in accordance with the zero-knowledge protocol, that the user of the computer program is impacted by the security vulnerability.

15. A computer program product (818, 822) comprising a computer-readable storage medium having instructions recorded thereon for enabling a processor-based system (102A-102M, 106A-106N, 700, 800) to increase security of a computer program using unstructured text (110, 710) by performing operations, the operations comprising:
receiving (202) the unstructured text (110, 710) from web-based sources, the unstructured text (110, 710) including user-generated posts (112, 712);
training (204) a machine learning model (116, 716) by performing the following operations:
determining (206) each keyword of a plurality of keywords in the unstructured text (110, 710) that corresponds to the computer program based at least in part on a difference between a frequency with which the respective keyword occurs in a first context in product documentation regarding the computer program and a frequency with which the respective keyword occurs in the first context in a general language corpus being greater than or equal to a
first threshold, wherein the product documentation is associated with a provider of the
computer program, and wherein the first context is associated with at least one of the
computer program and a dependency of the computer program; and
determining (208) each keyword of the plurality of keywords in the unstructured text (110, 710) that corresponds to a security vulnerability based at least in part on a difference between a frequency with which the respective keyword occurs in a second context in the unstructured text and a frequency with which the respective keyword occurs in the second context in the general
language corpus being greater than or equal to a second threshold, wherein the second
context is associated with the security vulnerability;
filtering (210) the user-generated posts (112, 712) that are included in the unstructured text (110, 710), using the machine learning model (116, 716), to provide a subset of the user-generated posts (112, 712) such that each user-generated post in the subset includes a keyword that corresponds to the computer program and a keyword that corresponds to the security vulnerability; and
generating (212) a report that includes information regarding the subset of the user-generated posts (112, 712).

## Patentansprüche

1. System (102A-102M, 106A-106N, 700, 800) zur Erhöhung der Sicherheit eines Computerprogramms mithilfe unstrukturierter Texte (110; 710), wobei das System (102A-102M, 106A-106N, 700, 800) Folgendes umfasst:
einen Speicher (804, 808, 810); und
ein Verarbeitungssystem (802), das an den Speicher (804, 808, 810) gekoppelt ist, wobei das Verarbeitungssystem (802) zu Folgendem konfiguriert ist:
Empfangen (202) der unstrukturierten Texte (110, 710) von webbasierten Quellen, wobei die unstrukturierten Texte (110; 710) benutzergenerierte Posts (112, 712) beinhalten;
Trainieren (204) eines Maschinenlernmodells (116, 716) durch Durchführen der folgenden Operationen:
Bestimmen (206) jedes Schlüsselwortes aus einer Vielzahl von Schlüsselwörtern in den unstrukturierten Texten (110, 710), das dem Computerprogramm entspricht, basierend zumindest teilweise auf einem Unterschied zwischen einer Häufigkeit, mit der das jeweilige Schlüsselwort in einem ersten Kontext in Produktdokumentation bezüglich des Computerprogramms vorkommt, und einer Häufigkeit, mit der das jeweilige Schlüsselwort in dem ersten Kontext in einem allgemeinen Sprachkorpus, der ein erstes Kriterium erfüllt, vorkommt, wobei die Produktdokumentation mit einem Anbieter des Computerprogramms assoziiert ist, und wobei der erste Kontext mit zumindest einem von dem Computerprogramm und einer Abhängigkeit des Computerprogramms assoziiert ist; und
Bestimmen (208) jedes Schlüsselwortes aus der Vielzahl von Schlüsselwörtern in den unstrukturierten Texten (110, 710), das einer Sicherheitslücke entspricht, basierend zumindest teilweise auf einem Unterschied zwischen einer Häufigkeit, mit der das jeweilige Schlüsselwort in einem zweiten Kontext in den unstrukturierten Texten vorkommt, und einer Häufigkeit, mit der das jeweilige Schlüsselwort in dem zweiten Kontext in dem allgemeinen Sprachkorpus, der ein zweites Kriterium erfüllt, vorkommt, wobei der zweite Kontext mit der Sicherheitslücke assoziiert ist;
Filtern (210) der benutzergenerierten Posts (112, 712), die in den unstrukturierten Texten (110, 710) beinhaltet sind, mithilfe des Maschinenlernmodells (116, 716), um eine Teilmenge der benutzergenerierten Posts (112, 712) bereitzustellen, sodass jeder benutzergenerierte Post in der Teilmenge ein Schlüsselwort, das dem Computerprogramm entspricht, und ein Schlüsselwort, das der Sicherheitslücke entspricht, beinhaltet; und
Durchführen (212) einer Handlung basierend zumindest teilweise auf der Teilmenge der benutzergenerierten Posts (112, 712).

2. System nach Anspruch 1, wobei das Maschinenlernmodell agnostisch in Bezug auf die webbasierten Quellen ist, von denen die unstrukturierten Texte empfangen werden.

3. System nach Anspruch 1, wobei das Maschinenlernmodell agnostisch in Bezug auf eine Sprache ist, in der jeder der benutzergenerierten Posts geschrieben ist.

4. System nach Anspruch 1, wobei das Verarbeitungssystem zu Folgendem konfiguriert ist:
Identifizieren einer Sicherheitslücke in dem Computerprogramm basierend zumindest teilweise auf der Teilmenge der benutzergenerierten Posts, welche die Sicherheitslücke angibt; und
Auflösen der Sicherheitslücke als Ergebnis dessen, dass die Sicherheitslücke identifiziert wird.

5. System nach Anspruch 1, wobei das Verarbeitungssystem zu Folgendem konfiguriert ist:
Festlegen einer zu zahlenden Prämie für Informationen bezüglich der Sicherheitslücke; und
wobei die Prämie zumindest teilweise auf Informationen basiert, die in der Teilmenge der benutzergenerierten Posts beinhaltet sind.

6. System nach Anspruch 1, wobei das Verarbeitungssystem zu Folgendem konfiguriert ist:
Identifizieren eines Benutzergefühls bezüglich des Computerprogramms basierend zumindest teilweise auf der Teilmenge der benutzergenerierten Posts; und
Durchführen der Handlung basierend zumindest teilweise auf dem Benutzergefühl.

7. System nach Anspruch 1, wobei jeder der benutzergenerierten Posts einen Autor hat; und
wobei das Verarbeitungssystem zu Folgendem konfiguriert ist:
für jeden der benutzergenerierten Posts, Hash-Identifizieren von Informationen, die den Autor des jeweiligen benutzergenerierten Posts identifizieren, um eine gehashte Autorenkennung für den jeweiligen benutzergenerierten Post bereitzustellen;
Bestimmen, welche der gehashten Autorenkennungen mit einem Verhaltensmuster bezüglich der Sicherheitslücke assoziiert ist, basierend zumindest teilweise auf den benutzergenerierten Posts in der Teilmenge, die zu dem Verhaltensmuster beitragen; und
Durchführen der Handlung durch Generieren eines Berichts, der angibt, welche der gehashten Autorenkennungen mit dem Verhaltensmuster bezüglich der Sicherheitslücke assoziiert ist.

8. System nach Anspruch 1, wobei das Verarbeitungssystem ferner zu Folgendem konfiguriert ist:
Verschlüsseln von Links zu den jeweiligen benutzergenerierten Posts mithilfe jeweiliger Verschlüsselungsschlüssel, um jeweilige verschlüsselte Links bereitzustellen; und
Speichern der Verschlüsselungsschlüssel anstelle der jeweiligen benutzergenerierten Posts in einem Speicher.

9. System nach Anspruch 1, wobei der erste Kontext mit dem Computerprogramm assoziiert ist.

10. Verfahren zur Erhöhung der Sicherheit eines Computerprogramms mithilfe unstrukturierter Texte (110, 710), wobei das Verfahren durch ein Rechensystem (102A-102M, 106A-106N, 700, 800) implementiert ist, wobei das Verfahren Folgendes umfasst:
Empfangen (202) der unstrukturierten Texte (110, 710) von webbasierten Quellen, wobei die unstrukturierten Texte benutzergenerierte Posts (112, 712) beinhalten;
Trainieren (204) eines Maschinenlernmodells (116, 716) durch Durchführen der folgenden Operationen:
Bestimmen (206) jedes Schlüsselwortes aus einer Vielzahl von Schlüsselwörtern in den unstrukturierten Texten (110, 710), das dem Computerprogramm entspricht, basierend zumindest teilweise auf einem Unterschied zwischen einer Häufigkeit, mit der das jeweilige Schlüsselwort in einem ersten Kontext in Produktdokumentation bezüglich des Computerprogramms vorkommt, und einer Häufigkeit, mit der das jeweilige Schlüsselwort in dem ersten Kontext in einem allgemeinen Sprachkorpus, der größer als ein oder gleich einem ersten Schwellenwert ist, vorkommt, wobei die Produktdokumentation mit einem Anbieter des Computerprogramms assoziiert ist, und wobei der erste Kontext mit zumindest einem von dem Computerprogramm und einer Abhängigkeit des Computerprogramms assoziiert ist; und
Bestimmen (208) jedes Schlüsselwortes aus der Vielzahl von Schlüsselwörtern in den unstrukturierten Texten (110, 710), das einer Sicherheitslücke entspricht, basierend zumindest teilweise auf einem Unterschied zwischen einer Häufigkeit, mit der das jeweilige Schlüsselwort in einem zweiten Kontext in den unstrukturierten Texten vorkommt, und einer Häufigkeit, mit der das jeweilige Schlüsselwort in dem zweiten Kontext in dem allgemeinen Sprachkorpus, der größer als ein oder gleich einem zweiten Schwellenwert ist, vorkommt, wobei der zweite Kontext mit der Sicherheitslücke assoziiert ist;
Filtern (210) der benutzergenerierten Posts (112, 712), die in den unstrukturierten Texten (110, 710) beinhaltet sind, mithilfe des Maschinenlernmodells (116, 716), um eine Teilmenge der benutzergenerierten Posts (112, 712) bereitzustellen, sodass jeder benutzergenerierte Post in der Teilmenge ein Schlüsselwort, das dem Computerprogramm entspricht, und ein Schlüsselwort, das der Sicherheitslücke entspricht, beinhaltet; und
Durchführen (212) einer Handlung basierend zumindest teilweise auf der Teilmenge der benutzergenerierten Posts (112, 712).

11. Verfahren nach Anspruch 10, wobei das Durchführen der Handlung Folgendes umfasst: Bestimmen einer Eigenschaft der Teilmenge der benutzergenerierten Posts; und Generieren eines Rechenstatements, das dazu konfiguriert ist, Existenz der Eigenschaft gemäß einem Zero-Knowledge-Protokoll zu beweisen.

12. Verfahren nach Anspruch 11, ferner umfassend:
Bestimmen einer Anzahl an Benutzern, die zumindest einen der benutzergenerierten Posts in der Teilmenge generiert;
wobei das Bestimmen der Eigenschaft Folgendes umfasst:
Bestimmen, dass die Anzahl an Benutzern, die zumindest einen der benutzergenerierten Posts in der Teilmenge generiert, größer als eine oder gleich einer Schwellenanzahl ist; und
wobei das Generieren des Rechenstatements Folgendes umfasst:
Konfigurieren des Rechenstatements, um gemäß dem Zero-Knowledge-Protokoll zu beweisen, dass die Anzahl an Benutzern, die zumindest einen der benutzergenerierten Posts in der Teilmenge generiert, größer als die oder gleich der Schwellenanzahl ist.

13. Verfahren nach Anspruch 11, ferner umfassend:
Bestimmen von Zeiten, zu denen die benutzergenerierten Posts erstellt werden;
Bestimmen einer frühesten Zeit der bestimmten Zeiten; und
Bestimmen einer Menge an Zeit, um welche die früheste Zeit einer aktuellen Zeit vorausgeht;
wobei das Bestimmen der Eigenschaft Folgendes umfasst:
Bestimmen, dass die Menge an Zeit, um welche die früheste Zeit der aktuellen Zeit vorausgeht, größer als eine oder gleich einer Schwellenmenge ist; und
wobei das Generieren des Rechenstatements Folgendes umfasst:
Konfigurieren des Rechenstatements, um gemäß dem Zero-Knowledge-Protokoll zu beweisen, dass die Menge an Zeit, um welche die früheste Zeit der aktuellen Zeit vorausgeht, größer als die oder gleich der Schwellenmenge ist.

14. Verfahren nach Anspruch 11, wobei das Bestimmen der Eigenschaft Folgendes umfasst:
Bestimmen eines Benutzers des Computerprogramms, der von der Sicherheitslücke betroffen ist; und
wobei das Generieren des Rechenstatements Folgendes umfasst:
Konfigurieren des Rechenstatements, um gemäß dem Zero-Knowledge-Protokoll zu beweisen, dass der Benutzer des Computerprogramms von der Sicherheitslücke betroffen ist.

15. Computerprogrammprodukt (818, 822), umfassend ein computerlesbares Speichermedium, auf dem Anweisungen aufgezeichnet sind, um einem prozessorbasierten System (102A-102M, 106A-106N, 700, 800) zu ermöglichen, die Sicherheit eines Computerprogramms mithilfe unstrukturierter Texte (110, 710) zu erhöhen, indem Operationen durchgeführt werden, wobei die Operationen Folgendes umfassen:
Empfangen (202) der unstrukturierten Texte (110, 710) von webbasierten Quellen, wobei die unstrukturierten Texte (110, 710) benutzergenerierte Posts (112, 712) beinhalten;
Trainieren (204) eines Maschinenlernmodells (116, 716) durch Durchführen der folgenden Operationen:
Bestimmen (206) jedes Schlüsselwortes aus einer Vielzahl von Schlüsselwörtern in den unstrukturierten Texten (110, 710), das dem Computerprogramm entspricht, basierend zumindest teilweise auf einem Unterschied zwischen einer Häufigkeit, mit der das jeweilige Schlüsselwort in einem ersten Kontext in Produktdokumentation bezüglich des Computerprogramms vorkommt, und einer Häufigkeit, mit der das jeweilige Schlüsselwort in dem ersten Kontext in einem allgemeinen Sprachkorpus, der größer als ein oder gleich einem ersten Schwellenwert ist, vorkommt, wobei die Produktdokumentation mit einem Anbieter des Computerprogramms assoziiert ist, und wobei der erste Kontext mit zumindest einem von dem Computerprogramm und einer Abhängigkeit des Computerprogramms assoziiert ist; und
Bestimmen (208) jedes Schlüsselwortes aus der Vielzahl von Schlüsselwörtern in den unstrukturierten Texten (110, 710), das einer Sicherheitslücke entspricht, basierend zumindest teilweise auf einem Unterschied zwischen einer Häufigkeit, mit der das jeweilige Schlüsselwort in einem zweiten Kontext in den unstrukturierten Texten vorkommt, und einer Häufigkeit, mit der das jeweilige Schlüsselwort in dem zweiten Kontext in dem allgemeinen Sprachkorpus, der größer als ein oder gleich einem zweiten Schwellenwert ist, vorkommt, wobei der zweite Kontext mit der Sicherheitslücke assoziiert ist;
Filtern (210) der benutzergenerierten Posts (112, 712), die in den unstrukturierten Texten (110, 710) beinhaltet sind, mithilfe des Maschinenlernmodells (116, 716), um eine Teilmenge der benutzergenerierten Posts (112, 712) bereitzustellen, sodass jeder benutzergenerierte Post in der Teilmenge ein Schlüsselwort, das dem Computerprogramm entspricht, und ein Schlüsselwort, das der Sicherheitslücke entspricht, beinhaltet; und
Generieren (212) eines Berichts, der Informationen bezüglich der Teilmenge der benutzergenerierten Posts (112, 712) beinhaltet.

## Revendications

1. Système (102A-102M, 106A-106N, 700, 800) destiné à renforcer la sécurité d'un programme informatique utilisant du texte non structuré (110 ; 710), le système (102A-102M, 106A-106N, 700, 800) comprenant :
une mémoire (804, 808, 810) ; et
un système de traitement (802) couplé à la mémoire (804, 808, 810), le système de traitement (802) étant configuré pour :
recevoir (202) le texte non structuré (110, 710) provenant de sources Web, le texte non structuré (110 ; 710) comportant des publications générées par l'utilisateur (112, 712) ;
entraîner (204) un modèle d'apprentissage automatique (116, 716) en effectuant les opérations suivantes :
la détermination (206) de chaque mot-clé d'une pluralité de mots-clés dans le texte non structuré (110, 710) qui correspond au programme informatique en se basant au moins en partie sur une différence entre la fréquence à laquelle le mot-clé respectif apparaît dans un premier contexte dans la documentation du produit concernant le programme informatique et la fréquence à laquelle le mot-clé respectif apparaît dans le premier contexte dans un corpus de langue générale satisfaisant un premier critère, dans lequel la documentation du produit est associée à un fournisseur du programme informatique, et dans lequel le premier contexte est associé à au moins un élément du programme informatique et d'une dépendance du programme informatique ; et
la détermination (208) de chaque mot-clé parmi la pluralité de mots-clés du texte non structuré (110, 710) qui correspond à une vulnérabilité de sécurité, en se basant au moins en partie sur une différence entre la fréquence à laquelle le mot-clé respectif apparaît dans un second contexte du texte non structuré et la fréquence à laquelle le mot-clé respectif apparaît dans le second contexte du corpus de langue générale satisfaisant un second critère, dans lequel le second contexte est associé à la vulnérabilité de sécurité ;
le filtrage (210) des publications générées par l'utilisateur (112, 712) incluses dans le texte non structuré (110, 710), en utilisant le modèle d'apprentissage automatique (116, 716), afin de fournir un sous-ensemble des publications générées par l'utilisateur (112, 712) de sorte que chaque publication générée par l'utilisateur dans le sous-ensemble comporte un mot-clé correspondant au programme informatique et un mot-clé correspondant à la vulnérabilité de sécurité ; et
la réalisation (212) d'une action en se basant au moins en partie sur le sous-ensemble des publications générées par l'utilisateur (112, 712).

2. Système selon la revendication 1, dans lequel le modèle d'apprentissage automatique est agnostique à l'égard des sources Web à partir desquelles le texte non structuré est reçu.

3. Système selon la revendication 1, dans lequel le modèle d'apprentissage automatique est agnostique à l'égard de la langue dans laquelle chacune des publications générées par l'utilisateur est écrite.

4. Système selon la revendication 1, dans lequel le système de traitement est configuré pour :
identifier une vulnérabilité de sécurité dans le programme informatique en se basant au moins en partie sur le sous-ensemble de publications générés par l'utilisateur indiquant la vulnérabilité de sécurité ; et
résoudre la vulnérabilité de sécurité suite à l'identification de la vulnérabilité de sécurité.

5. Système selon la revendication 1, dans lequel le système de traitement est configuré pour :
instaurer une prime à verser pour des informations concernant la vulnérabilité de sécurité ; et
dans lequel la prime est basée, au moins en partie, sur des informations incluses dans le sous-ensemble des publications générées par l'utilisateur.

6. Système selon la revendication 1, dans lequel le système de traitement est configuré pour :
identifier le ressenti de l'utilisateur concernant le programme informatique en se basant au moins en partie sur le sous-ensemble des publications générées par l'utilisateur ; et
réaliser l'action en se basant, au moins en partie, sur le ressenti de l'utilisateur.

7. Système selon la revendication 1, dans lequel chacune des publications générées par l'utilisateur a un auteur ; et
dans lequel le système de traitement est configuré pour :
pour chacune des publications générées par l'utilisateur, hacher des informations d'identification qui permettent d'identifier l'auteur de la publication générée par l'utilisateur respective afin de fournir un identifiant d'auteur haché pour la publication générée par l'utilisateur respective ;
déterminer lequel des identifiants d'auteur hachés est associé à un schéma comportemental relatif à la vulnérabilité de sécurité, en se basant au moins en partie sur les publications générées par l'utilisateur dans le sous-ensemble qui contribuent au schéma comportemental ; et
réaliser l'action en générant un rapport indiquant lequel des identifiants d'auteur hachés est associé au schéma comportemental concernant la vulnérabilité de sécurité.

8. Système selon la revendication 1, dans lequel le système de traitement est en outre configuré pour :
chiffrer des liens vers les publications respectives générées par l'utilisateur à l'aide de clés de chiffrement respectives afin de fournir des liens chiffrés respectifs ; et
stocker les clés de chiffrement à la place des publications correspondantes générées par l'utilisateur dans un espace de stockage.

9. Système selon la revendication 1, dans lequel le premier contexte est associé au programme informatique.

10. Procédé de renforcement de la sécurité d'un programme informatique utilisant du texte non structuré (110, 710), le procédé étant mis en œuvre par un système informatique (102A-102M, 106A-106N, 700, 800), le procédé comprenant :
la réception (202) du texte non structuré (110, 710) provenant de sources Web, le texte non structuré comportant des publications générées par l'utilisateur (112, 712) ;
l'entraînement (204) d'un modèle d'apprentissage automatique (116, 716) en effectuant les opérations suivantes :
la détermination (206) de chaque mot-clé d'une pluralité de mots-clés dans le texte non structuré (110, 710) qui correspond au programme informatique en se basant au moins en partie sur une différence entre la fréquence à laquelle le mot-clé respectif apparaît dans un premier contexte dans la documentation du produit concernant le programme informatique et la fréquence à laquelle le mot-clé respectif apparaît dans le premier contexte dans un corpus de langue générale qui est supérieure ou égale à un premier seuil, dans lequel la documentation du produit est associée à un fournisseur du programme informatique, et dans lequel le premier contexte est associé à au moins un du programme informatique et d'une dépendance du programme informatique ; et
la détermination (208) de chaque mot-clé parmi la pluralité de mots-clés du texte non structuré (110, 710) qui correspond à une vulnérabilité de sécurité, en se basant au moins en partie sur une différence entre la fréquence à laquelle le mot-clé respectif apparaît dans un second contexte du texte non structuré et la fréquence à laquelle le mot-clé respectif apparaît dans le second contexte du corpus de langue générale qui est supérieur à un second seuil, dans lequel le second contexte est associé à la vulnérabilité de sécurité ;
le filtrage (210) des publications générées par l'utilisateur (112, 712) incluses dans le texte non structuré (110, 710), en utilisant le modèle d'apprentissage automatique (116, 716), afin de fournir un sous-ensemble des publications générées par l'utilisateur (112, 712) de sorte que chaque publication générée par l'utilisateur dans le sous-ensemble comporte un mot-clé correspondant au programme informatique et un mot-clé correspondant à la vulnérabilité de sécurité ; et
la réalisation (212) d'une action en se basant au moins en partie sur le sous-ensemble des publications générées par l'utilisateur (112, 712).

11. Procédé selon la revendication 10, dans lequel la réalisation de l'action comprend : la détermination d'une propriété du sous-ensemble des publications générées par l'utilisateur ; et la génération d'une instruction de calcul configurée pour prouver l'existence de la propriété conformément à un protocole à connaissance nulle.

12. Procédé selon la revendication 11, comprenant en outre :
la détermination d'un nombre d'utilisateurs qui génèrent au moins une des publications générées par l'utilisateur dans le sous-ensemble ;
dans lequel la détermination de la propriété comprend :
la détermination que le nombre d'utilisateurs qui génèrent au moins une des publications générées par l'utilisateur du sous-ensemble est supérieur ou égal à un seuil prédéfini ; et
dans lequel la génération de l'instruction de calcul comprend :
la configuration de l'instruction de calcul pour prouver, conformément au protocole à connaissance nulle, que le nombre d'utilisateurs qui génèrent au moins une des publications générées par l'utilisateur dans le sous-ensemble est supérieur ou égal au nombre seuil.

13. Procédé selon la revendication 11, comprenant en outre :
la détermination de moments où les publications générées par l'utilisateur sont créées ;
la détermination du moment le plus ancien parmi les moments déterminés ; et
la détermination de la durée dont le moment le plus ancien précède le moment actuel ;
dans lequel la détermination de la propriété comprend :
la détermination que la durée entre le moment le plus ancien et le moment actuel est supérieure ou égale à un seuil donné ; et
dans lequel la génération de l'instruction de calcul comprend :
la configuration de l'instruction de calcul pour prouver, conformément au protocole à connaissance nulle, que la durée dont le moment le plus ancien précède le moment actuel est supérieure ou égale à la valeur seuil.

14. Procédé selon la revendication 11, dans lequel la détermination de la propriété comprend :
la détermination d'un utilisateur du programme informatique affecté par la vulnérabiité de sécurité ; et
dans lequel la génération de l'instruction de calcul comprend :
la configuration de l'instruction de calcul pour prouver, conformément au protocole à connaissance nulle, que l'utilisateur du programme informatique est affecté par la vulnérabilité de sécurité.

15. Produit de programme informatique (818, 822) comprenant un support de stockage lisible par ordinateur sur lequel sont enregistrées des instructions permettant à un système à processeur (102A-102M, 106A-106N, 700, 800) de renforcer la sécurité d'un programme informatique utilisant du texte non structuré (110, 710) en réalisant des opérations, les opérations comprenant :
la réception (202) du texte non structuré (110, 710) provenant de sources Web, le texte non structuré (110, 710) comportant des publications générées par l'utilisateur (112, 712) ;
l'entraînement (204) d'un modèle d'apprentissage automatique (116, 716) en effectuant les opérations suivantes :
la détermination (206) de chaque mot-clé d'une pluralité de mots-clés dans le texte non structuré (110, 710) qui correspond au programme informatique en se basant au moins en partie sur une différence entre la fréquence à laquelle le mot-clé respectif apparaît dans un premier contexte dans la documentation du produit concernant le programme informatique et la fréquence à laquelle le mot-clé respectif apparaît dans le premier contexte dans un corpus de langue générale qui est supérieure ou égale à un premier seuil, dans lequel la documentation du produit est associée à un fournisseur du programme informatique, et dans lequel le premier contexte est associé à au moins un du programme informatique et d'une dépendance du programme informatique ; et
la détermination (208) de chaque mot-clé parmi la pluralité de mots-clés du texte non structuré (110, 710) qui correspond à une vulnérabilité de sécurité, en se basant au moins en partie sur une différence entre la fréquence à laquelle le mot-clé respectif apparaît dans un second contexte du texte non structuré et la fréquence à laquelle le mot-clé respectif apparaît dans le second contexte du corpus de langue générale qui est supérieure ou égale à un second seuil, dans lequel le second contexte est associé à la vulnérabilité de sécurité ;
le filtrage (210) des publications générées par l'utilisateur (112, 712) incluses dans le texte non structuré (110, 710), en utilisant le modèle d'apprentissage automatique (116, 716), afin de fournir un sous-ensemble des publications générées par l'utilisateur (112, 712) de sorte que chaque publication générée par l'utilisateur dans le sous-ensemble comporte un mot-clé correspondant au programme informatique et un mot-clé correspondant à la vulnérabilité de sécurité ; et
la génération (212) d'un rapport qui inclut des informations concernant le sous-ensemble des publications générées par l'utilisateur (112, 712).
